# EUROPEAN PATENT APPLICATION

(11) **EP 4 474 704 A1**
(43) Date of publication of application: **11.12.2024**
(21) Application number: 23763385.4
(22) Date of filing: 27.02.2023
(51) Int. Cl.: F23G 5/50, G06V 20/00

(54) **INFORMATION PROCESSING DEVICE, INFORMATION PROCESSING METHOD, AND INFORMATION PROCESSING PROGRAM**

(30) Priority: 02.03.2022 JP 2022031773; 02.03.2022 JP 2022031778
(71) Applicant: Ebara Environmental Plant Co., Ltd., Tokyo 144-0042 (JP); Ridge-I Inc., Tokyo 100-0004 (JP)
(72) Inventor: MACHIDA Junya, Tokyo 144-0042 (JP); MATSUOKA Kei, Tokyo 144-0042 (JP); ITO Kazuya, Tokyo 144-0042 (JP); SAKAI Mihoko, Tokyo 144-0042 (JP); ICHIKI Kazuki, Tokyo 100-0004 (JP); IZAWA Ryohei, Tokyo 100-0004 (JP); MEKTOUBI Yassine, Tokyo 100-0004 (JP); JINGUUJI Masanari, Tokyo 100-0004 (JP); SUCGANG Nathalie Joy, Tokyo 100-0004 (JP)
(74) Representative: Carstens, Dirk Wilhelm
(86) International application number: PCT/JP2023/006999
(87) International publication number: WO 2023/167127

(57) **Abstract**

An information processing device includes a first image analysis unit that uses a first learned model obtained by machine learning first training data generated by giving a classification label on at least one first evaluation axis, which is an element for determining a combustion state, to infrared image data in an incinerator imaged by an infrared imaging device, and performs evaluation on the first evaluation axis with new infrared image data in the incinerator as an input, and a combustion state determination unit that determines a current combustion state on a basis of an evaluation result on the first evaluation axis.

## Description

### Technical Field

The present disclosure relates to an information processing device, an information processing method, and an information processing program for determining a combustion state in an incinerator.

### Background Art

In waste incineration facilities, in order to not only efficiently recover heat from combustion exhaust gas but also suppress emission of harmful substances (CO, Dioxins, NOx, or the like), automatic combustion control (ACC) is introduced for the purpose of stabilizing combustion of waste materials.

However, when ACC cannot cope with the maintenance of the combustion state in the incinerator due to a significant change in waste quality or the like, a skilled operator may manually intervene. At this time, the skilled operator determines manual intervention based on process values obtained from various sensors and a combustion image obtained by imaging combustion states.

Information of the combustion image is a very important index, and each company has filed a patent on a technique for classifying a combustion state and predicting a process value from the combustion image by an image recognition technique mainly using deep learning. For example, JP 2021-8991 A (Patent Literature 1) proposes the use of a classification model that classifies the combustion state into, for example, eight categories using the combustion image as an input. In addition, Japanese Patent No. 6824859 (Patent Literature 2) proposes creation of an estimation model that predicts an estimated value (CO concentration, NOx concentration, unburned content in ash, and the like) according to a combustion state using a combustion image as an input.

### Summary of Invention

The combustion image mainly illustrates flame in a main combustion area in the incinerator (flame generated due to combustion of combustible gas generated by thermal decomposition or partial oxidation of waste materials), and information such as intensity of flame can be seen from the combustion image.

However, the combustion state is affected not only by the state of flame but also by information on the object to be combusted (for example, the quantity, amount, and type of the object to be combusted). For example, even when objects to be combusted are burning with the same flame intensity, if the amount of the object to be combusted that are burning at that time is different, there is a high possibility that numerical values such as the actual exhaust gas concentration (CO concentration, or the like) are different. In addition, with respect to a technique for classifying a combustion state and predicting a process value from the combustion image, there is a possibility that only a combustion image by which only a situation of flame can be grasped is classified as a similar combustion state even if it is a combustion state that is actually different due to, for example, a difference in the amount of the object to be combusted, and thus prediction/estimation of the process value and classification/prediction/estimation of the combustion state may not be performed well.

In Patent Literature 2, a combustion image is associated with a measurement value (CO concentration, NOx concentration, unburned content in ash, and the like) obtained as a result of combustion, and a model for predicting the measurement value from the combustion image is created. However, since the measurement value is obtained as a result of the ever-changing combustion state/situation, it is considered that accurately grasping the combustion state is an important factor in grasping the operation state of the incineration facility and the subsequent operation management (combustion control) rather than predicting the measurement value.

In Patent Literature 1, a model is generated by machine learning of teaching data in which combustion image data is used as input parameters for learning, and data obtained by quantifying the intensity of a combustion state, data obtained by quantifying the position of a combustion fuel switching point, and data obtained by quantifying the degree of generation of an unburned object are used as output parameters for learning. However, Patent Literature 1 describes that the learned model classifies the combustion state into a plurality of (for example, eight) categories, but details of the relationship and classification between pieces of the quantified data as output parameters are not clearly described, and there is a possibility that the classification of the combustion state cannot be performed well.

It is desirable to provide a technique for more accurately classifying, predicting, and estimating a combustion state in an incinerator.

An information processing device according to one aspect of the present disclosure includes:
a first image analysis unit that uses a first learned model obtained by machine learning first training data generated by giving a classification label on at least one first evaluation axis, which is an element for determining a combustion state, to infrared image data in an incinerator imaged by an infrared imaging device, and performs evaluation on the first evaluation axis with new infrared image data in the incinerator as an input; and
a combustion state determination unit that determines a current combustion state on the basis of an evaluation result on the first evaluation axis.

An information processing device according to another aspect of the present disclosure includes:
a first image analysis unit that uses a first learned model obtained by machine learning first training data generated by giving a classification label on at least one first evaluation axis, which is an element for determining a combustion state, to first image data in the incinerator imaged by a first imaging device, and performs evaluation on the first evaluation axis with new first image data in the incinerator as an input;
a second image analysis unit that uses a second learned model obtained by machine learning second training data generated by giving a classification label on at least one second evaluation axis, which is an element for determining a combustion state, to second image data in an incinerator imaged by a second imaging device, and performs evaluation on the second evaluation axis with new second image data in the incinerator as an input; and
a combustion state determination unit that determines a current combustion state by mapping respective evaluation results on the first evaluation axis and the second evaluation axis on a predetermined combustion state determination map having the first evaluation axis and the second evaluation axis as coordinate axes.

An information processing device according to still another aspect of the present disclosure includes:
a first image analysis unit that uses a first learned model obtained by machine learning first training data generated by giving a classification label on each of two or more of first evaluation axes, which is an element for determining a combustion state, to first image data in an incinerator imaged by a first imaging device, and performs evaluation on each of the two or more of the first evaluation axes with new image data in the incinerator as an input; and
a combustion state determination unit that determines a current combustion state by mapping respective evaluation results on the two or more of the first evaluation axes on a predetermined combustion state determination map having the two or more of the first evaluation axes as coordinate axes.

### Brief Description of Drawings

Fig. 1 is a schematic diagram illustrating a configuration of an incineration facility according to a first embodiment.
Fig. 2 is a block diagram illustrating a configuration of an information processing device according to the first embodiment.
Fig. 3 is a flowchart illustrating an example of an information processing method by the information processing device according to the first embodiment.
Fig. 4 is a diagram illustrating an example of a combustion state determination map.
Fig. 5 is a schematic diagram illustrating a configuration of an incineration facility according to a second embodiment.
Fig. 6 is a block diagram illustrating a configuration of an information processing device according to the second embodiment.
Fig. 7 is a flowchart illustrating an example of an information processing method by the information processing device according to the second embodiment.
Fig. 8 is a schematic diagram illustrating a configuration of an incineration facility according to a third embodiment.
Fig. 9 is a block diagram illustrating a configuration of an information processing device according to the third embodiment.
Fig. 10 is a flowchart illustrating an example of an information processing method by the information processing device according to the third embodiment.

### Description of Embodiments

An information processing device according to a first aspect of the embodiment includes:
a first image analysis unit that uses a first learned model obtained by machine learning first training data generated by giving a classification label on at least one first evaluation axis, which is an element for determining a combustion state, to infrared image data in an incinerator imaged by an infrared imaging device, and performs evaluation on the first evaluation axis with new infrared image data in the incinerator as an input; and
a combustion state determination unit that determines a current combustion state on the basis of an evaluation result on the first evaluation axis.

According to such an aspect, by appropriately selecting the imaging wavelength, the infrared imaging device can acquire, as the infrared image data in the incinerator, an image including an image of an object to be combusted actually being combusted from the upstream side of the incinerator from which the influence of flame has been removed, and thus, by evaluating the combustion state on at least one first evaluation axis, which is an element for determining the combustion state, using the infrared image data in the incinerator and determining the combustion state on the basis of the evaluation result, the combustion state in the incinerator can be classified, predicted, and estimated more accurately as compared with a case where classification, prediction, and estimation of the combustion state and prediction and estimation of the process value are performed only from the combustion image from which only the situation of flame can be grasped.

An information processing device according to a second aspect of the embodiment is the information processing device according to the first aspect, in which
the first evaluation axis includes at least one of an amount of an object to be combusted, quality of the object to be combusted, a type of the object to be combusted, a temperature of the object to be combusted, a combustion gas generation amount (CO and the like), or a temperature of a wall of the incinerator.

An information processing device according to a third aspect of the embodiment is the information processing device according to the first or second aspect, in which
the infrared image data is moving image data within 60 seconds.

According to findings by the present inventors, the combustion state in the incinerator changes in five to ten seconds. Therefore, according to such an aspect, by using moving image data within 60 seconds as one segment of data as infrared image data in the incinerator, it is possible to more accurately classify, predict, and estimate the combustion state in the incinerator.

An information processing device according to a fourth aspect of the embodiment is the information processing device according to any one of the first to third aspects, in which
the infrared image data is moving image data for five seconds or more.

According to such an aspect, while the combustion state in the incinerator changes in five to ten seconds, moving image data for five seconds or more is used as one segment of data as infrared image data in the incinerator, whereby the combustion state in the incinerator can be classified, predicted, and estimated more accurately.

An information processing device according to a fifth aspect of the embodiment is the information processing device according to any one of the first to fourth aspects, in which
the classification label is at least one of a label indicating which of predetermined classification items corresponds to or a relative order among a plurality of pieces of infrared image data.

As a result of actual verification by the present inventors, it has been confirmed that the combustion state in the incinerator can be classified, predicted, and estimated more accurately by performing evaluation on the first evaluation axis using the first learned model obtained by machine learning (machine-learned ranking) the first training data generated by giving the relative order on the first evaluation axis among the plurality of pieces of infrared image data to the infrared image data in the incinerator imaged by the infrared imaging device, and determining the combustion state on the basis of the evaluation result. Therefore, according to such an aspect, it is possible to more accurately classify, predict, and estimate the combustion state in the incinerator.

An information processing device according to a sixth aspect of the embodiment is the information processing device according to any one of the first to fifth aspects, in which
the first image analysis unit uses a first learned model obtained by machine learning first training data generated by giving a classification label on the first evaluation axis to a combination of the infrared image data in the incinerator and process data obtained from a sensor installed in a facility, and/or a calculated value obtained by calculation from the process data, and performs evaluation on the first evaluation axis with a combination of new infrared image data in the incinerator and new process data and/or a calculated value obtained by calculation from the process data as an input.

An information processing device according to a seventh aspect of the embodiment is the information processing device according to the sixth aspect, in which
the process data is data in consideration of a time lag between an imaging time of the infrared image data and a response time of the sensor. The time lag may be appropriately determined on the basis of a response speed of the sensor, an installation position of the sensor in a facility, an experiment, a simulation, or an empirical rule of an operator.

An information processing device according to an eighth aspect of the embodiment is the information processing device according to any one of the first to seventh aspects, in which
the first image analysis unit uses a first learned model obtained by machine learning first training data generated by giving a classification label on each of two or more of the first evaluation axes, which is an element for determining a combustion state, to infrared image data in the incinerator, and performs evaluation on each of the two or more of the first evaluation axes with new infrared image data in the incinerator as an input, and
the combustion state determination unit determines a current combustion state by mapping respective evaluation results on the two or more of the first evaluation axes on a predetermined combustion state determination map having the two or more of the first evaluation axes as coordinate axes.

According to such an aspect, evaluation is performed on each of the two or more first evaluation axes, which are elements for determining the combustion state, using the infrared image data in the incinerator, and the combustion state is determined on the basis of respective evaluation results on the two or more first evaluation axes, so that the combustion state can be accurately classified, predicted, and estimated as compared with a case where the combustion state is determined on the basis of the evaluation result on one evaluation axis. In addition, since the combustion state is determined by mapping respective evaluation results on the two or more first evaluation axes on the combustion state determination map, it is possible to intuitively grasp the relationship between the respective evaluation results on the two or more first evaluation axes and the combustion state that is a determination result, and to determine the combustion state at high speed.

An information processing device according to a ninth aspect of the embodiment is the information processing device according to any one of the first to seventh aspects, further including:
a second image analysis unit that uses a second learned model obtained by machine learning second training data generated by giving a classification label on at least one second evaluation axis, which is an element for determining a combustion state, to visible light image data in the incinerator imaged by a visible light imaging device, and performs evaluation on the second evaluation axis with new visible light image data in the incinerator as an input, in which
the combustion state determination unit determines a current combustion state by mapping respective evaluation results on the first evaluation axis and the second evaluation axis on a predetermined combustion state determination map having the first evaluation axis and the second evaluation axis as coordinate axes.

According to such an aspect, in addition to the evaluation on the first evaluation axis, which is an element for determining the combustion state, using the infrared image data in the incinerator, the evaluation on the second evaluation axis, which is an element for determining the combustion state, is performed using the visible light image data in the incinerator, and the combustion state is determined on the basis of the evaluation results on the first evaluation axis and the second evaluation axis, and thus the combustion state can be accurately classified, predicted, and estimated as compared with a case where the combustion state is determined on the basis of the evaluation result on one evaluation axis. In addition, since the combustion state is determined by mapping respective evaluation results on the first evaluation axis and the second evaluation axis on the combustion state determination map, it is possible to intuitively grasp the relationship between the respective evaluation results on the first evaluation axis and the second evaluation axis and the combustion state that is a determination result, and it is possible to determine the combustion state at high speed.

An information processing device according to a tenth aspect of the embodiment is the information processing device according to the ninth aspect, in which
the second evaluation axis includes at least one of a flame state, a position of a combustion completion point, a shape of the combustion completion point, an amount of an object to be combusted, quality of the object to be combusted, a type of the object to be combusted, an amount of an unburned object, or an amount of incineration ash.

An information processing device according to an 11th aspect of the embodiment is the information processing device according to any one of the first to tenth aspects, in which
the combustion state determination unit corrects a determination result of the combustion state according to process data obtained from a sensor installed in a facility and/or a calculated value obtained by calculation from the process data.

An information processing device according to a 12th aspect of the embodiment is the information processing device according to any one of the first to 11th aspects, in which
the combustion state determination unit displays or activates an alert according to a determination result of the combustion state.

An information processing device according to a 13th aspect of the embodiment is the information processing device according to any one of the first to 12th aspects, further including:
an instruction unit that transmits an operation instruction to a crane control device and/or the combustion control device on the basis of a determination result of the combustion state determination unit.

An information processing device according to a 14th aspect of the embodiment is the information processing device according to any one of the first to 13th aspects, in which
the algorithm used for the machine learning includes at least one of statistical estimation, boosting, reinforcement learning and deep learning using maximum likelihood classification, Boltzmann machine, neural network (NN), support vector machine (SVM), Bayesian network, sparse regression, decision tree or random forest.

An information processing device according to a 15th aspect of the embodiment is the information processing device according to any one of the first to 14th aspects, further including:
a model construction unit that generates the first learned model by performing machine learning on first training data generated by giving a classification label on the first evaluation axis, which is an element for determining a combustion state, to infrared image data in an incinerator imaged by an infrared imaging device.

A system according to a 16th aspect of the embodiments includes:
the information processing device according to the 13th aspect; and
the crane control device that controls a crane that agitates or transports waste materials on the basis of an operation instruction transmitted from the information processing device, and/or the combustion control device that controls combustion of the waste materials in an incinerator.

An information processing method according to a 17th aspect of the embodiment is an information processing method executed by a computer, the method including:
a step of using a first learned model obtained by machine learning first training data generated by giving a classification label on at least one first evaluation axis, which is an element for determining a combustion state, to infrared image data in an incinerator imaged by an infrared imaging device, and performing evaluation on the first evaluation axis with new infrared image data in the incinerator as an input; and
a step of determining a current combustion state on the basis of an evaluation result on the first evaluation axis.

A storage medium according to an 18th aspect of the embodiment stores the following program in a non-transitory manner: a program causes a computer to execute:
a step of using a first learned model obtained by machine learning first training data generated by giving a classification label on at least one first evaluation axis, which is an element for determining a combustion state, to infrared image data in an incinerator imaged by an infrared imaging device, and performing evaluation on the first evaluation axis with new infrared image data in the incinerator as an input; and
a step of determining a current combustion state on the basis of an evaluation result on the first evaluation axis.

An information processing device according to a 19th aspect of the embodiment includes:
a first image analysis unit that uses a first learned model obtained by machine learning first training data generated by giving a classification label on at least one first evaluation axis, which is an element for determining a combustion state, to first image data in the incinerator imaged by a first imaging device, and performs evaluation on the first evaluation axis with new first image data in the incinerator as an input;
a second image analysis unit that uses a second learned model obtained by machine learning second training data generated by giving a classification label on at least one second evaluation axis, which is an element for determining a combustion state, to second image data in an incinerator imaged by a second imaging device, and performs evaluation on the second evaluation axis with new second image data in the incinerator as an input; and
a combustion state determination unit that determines a current combustion state by mapping respective evaluation results on the first evaluation axis and the second evaluation axis on a predetermined combustion state determination map having the first evaluation axis and the second evaluation axis as coordinate axes.

According to such an aspect, evaluation is performed on the first evaluation axis, which is an element for determining the combustion state, using the first image data in the incinerator, the evaluation on the second evaluation axis, which is an element for determining the combustion state, is performed using the second image data in the incinerator, and the combustion state is determined on the basis of the evaluation results on the first evaluation axis and the second evaluation axis, and thus the combustion state can be more accurately classified, predicted, and estimated as compared with a case where the combustion state is determined on the basis of the evaluation result on one evaluation axis. In addition, since the combustion state is determined by mapping respective evaluation results on the first evaluation axis and the second evaluation axis on the combustion state determination map, it is possible to intuitively grasp the relationship between the respective evaluation results on the first evaluation axis and the second evaluation axis and the combustion state that is a determination result, and it is possible to determine the combustion state at high speed.

An information processing device according to a 20th aspect of the embodiment is the information processing device according to the 19th aspect, in which
the first imaging device is an infrared imaging device, and the second imaging device is a visible light imaging device.

According to such an aspect, while the visible light imaging device can acquire an image in which the situation of flame can be grasped as the second image data (visible light image data) in the incinerator, the infrared imaging device can acquire an image including an image of an object to be combusted actually being combusted from the upstream side of the incinerator from which the influence of flame has been removed as the first image data (infrared image data) in the incinerator by appropriately selecting the imaging wavelength. Therefore, the combustion state in the incinerator can be classified, predicted, and estimated more accurately than a case where classification, prediction, and estimation of the combustion state and prediction and estimation of the process value are performed only from the combustion image in which only the situation of the flame can be grasped by performing evaluation on the first evaluation axis that is an element for determining the combustion state using the infrared image data in the incinerator, performing evaluation on the second evaluation axis that is an element for determining the combustion state using the visible light image data in the incinerator, and determining the combustion state using a combination of these evaluation results.

An information processing device according to a 21st aspect of the embodiment is the information processing device according to the 20th aspect, in which
the first evaluation axis includes at least one of an amount of an object to be combusted, quality of the object to be combusted, a type of the object to be combusted, a temperature of the object to be combusted, a combustion gas generation amount (CO and the like), or a temperature of a wall of the incinerator.

An information processing device according to a 22nd aspect of the embodiment is the information processing device according to the 20th or 21st aspect, in which
the second evaluation axis includes at least one of a flame state, a position of a combustion completion point, a shape of the combustion completion point, an amount of an object to be combusted, quality of the object to be combusted, a type of the object to be combusted, an amount of an unburned object, or an amount of incineration ash.

An information processing device according to a 23rd aspect of the embodiment is the information processing device according to any one of the 19th to 22nd aspects, in which
the first image data is moving image data within 60 seconds, and/or
the second image data is moving image data within 60 seconds.

According to findings by the present inventors, the combustion state in the incinerator changes in five to ten seconds. Therefore, according to such an aspect, by using moving image data within 60 seconds as one segment of data as infrared image data in the incinerator, it is possible to more accurately classify, predict, and estimate the combustion state in the incinerator.

An information processing device according to a 24th aspect of the embodiment is the information processing device according to any one of the 19th to 23rd aspects, in which
the first image data is moving image data for five seconds or more, and/or
the second image data is moving image data for five seconds or more.

According to such an aspect, while the combustion state in the incinerator changes in five to ten seconds, moving image data for five seconds or more is used as one segment of data as infrared image data in the incinerator, whereby the combustion state in the incinerator can be classified, predicted, and estimated more accurately.

An information processing device according to a 25th aspect of the embodiment is the information processing device according to any one of the 19th to 24th aspects, in which
the classification label in the first training data is at least one of a label indicating which of predetermined classification items corresponds to, or a relative order among a plurality of pieces of the first image data, and/or
the classification label in the second training data is at least one of a label indicating which of predetermined classification items corresponds to, or a relative order among a plurality of pieces of the second image data.

As a result of actual verification by the present inventors, it has been confirmed that the combustion state in the incinerator can be classified, predicted, and estimated more accurately by performing evaluation on the evaluation axis using a learned model obtained by machine learning (ranking learning) training data generated by giving a relative order on the evaluation axis among a plurality of pieces of image data to image data in the incinerator, and determining the combustion state on the basis of the evaluation result. Therefore, according to such an aspect, it is possible to more accurately classify, predict, and estimate the combustion state in the incinerator.

An information processing device according to a 26th aspect of the embodiment is the information processing device according to any one of the 19th to 25th aspects, in which
the first image analysis unit uses a first learned model obtained by machine learning first training data generated by giving a classification label on the first evaluation axis to a combination of first image data in the incinerator, process data obtained from a sensor installed in a facility, and/or a calculated value obtained by calculation from the process data, and performs evaluation on the first evaluation axis with a combination of new first image data in the incinerator and new process data and/or a calculated value obtained by calculation from the process data as an input, and/or
the second image analysis unit uses a second learned model obtained by machine learning second training data generated by giving a classification label on the second evaluation axis to a combination of second image data in the incinerator, process data obtained from a sensor installed in a facility, and/or a calculated value obtained by calculation from the process data, and performs evaluation on the second evaluation axis with a combination of new second image data in the incinerator and new process data and/or a calculated value obtained by calculation from the process data as an input.

An information processing device according to a 27th aspect of the embodiment is the information processing device according to the 26th aspect, in which
the process data is data in consideration of a time lag between an imaging time of the first image data and/or the second image data and a response time of the sensor. The time lag may be appropriately determined on the basis of at least one of a response speed of the sensor, an installation position of the sensor in a facility, an experiment, a simulation, or an empirical rule of an operator.

An information processing device according to a 28th aspect of the embodiment includes:
a first image analysis unit that uses a first learned model obtained by machine learning first training data generated by giving a classification label on each of two or more of first evaluation axes, which is an element for determining a combustion state, to first image data in an incinerator imaged by a first imaging device, and performs evaluation on each of the two or more of the first evaluation axes with new image data in the incinerator as an input; and
a combustion state determination unit that determines a current combustion state by mapping respective evaluation results on the two or more of the first evaluation axes on a predetermined combustion state determination map having the two or more of the first evaluation axes as coordinate axes.

According to such an aspect, evaluation is performed on each of the two or more first evaluation axes, which are elements for determining the combustion state, using the first image data in the incinerator, and the combustion state is determined on the basis of respective evaluation results on the two or more first evaluation axes, so that the combustion state can be more accurately classified, predicted, and estimated as compared with a case where the combustion state is determined on the basis of the evaluation result on one evaluation axis. In addition, since the combustion state is determined by mapping respective evaluation results on the two or more 12 evaluation axes on the combustion state determination map, it is possible to intuitively grasp the relationship between the respective evaluation results on the two or more first evaluation axes and the combustion state that is a determination result, and to determine the combustion state at high speed.

An information processing device according to a 29th aspect of the embodiment is the information processing device according to the 28 aspect, in which
the first imaging device is an infrared imaging device.

According to such an aspect, by appropriately selecting the imaging wavelength, the infrared imaging device can acquire, as the first image data (infrared image data) in the incinerator, an image including an image of an object to be combusted actually being combusted from the upstream side of the incinerator from which the influence of flame has been removed, and thus, by evaluating the first evaluation axis, which is an element for determining the combustion state, using the infrared image data in the incinerator and determining the combustion state using the evaluation result, the combustion state in the incinerator can be classified, predicted, and estimated more accurately as compared with a case where classification of the combustion state and prediction of the process value are performed only from the combustion image from which only the situation of flame can be grasped.

An information processing device according to a 30th aspect of the embodiment is the information processing device according to the 29th aspect, in which
the first imaging device is an infrared imaging device.

An information processing device according to a 31st aspect of the embodiment is the information processing device according to the 28th aspect, in which
the first imaging device is a visible light imaging device.

An information processing device according to a 32nd aspect of the embodiment is the information processing device according to the 31st aspect, in which
the first evaluation axis includes at least one of a flame state, a position of a combustion completion point, a shape of the combustion completion point, an amount of an object to be combusted, quality of the object to be combusted, a type of the object to be combusted, an amount of an unburned object, or an amount of incineration ash.

An information processing device according to a 33rd aspect of the embodiment is the information processing device according to any one of the 19th to 32nd aspects, in which
the combustion state determination unit corrects a determination result of the combustion state according to process data obtained from a sensor installed in a facility and/or a calculated value obtained by calculation from the process data.

An information processing device according to a 34th aspect of the embodiment is the information processing device according to the 19th to 33rd aspect, in which
the combustion state determination unit displays or activates an alert according to a determination result of the combustion state.

An information processing device according to a 35th aspect of the embodiment is the information processing device according to any one of the 19th to 34th aspects, further including:
an instruction unit that transmits an operation instruction to a crane control device and/or the combustion control device on the basis of a determination result of the combustion state determination unit.

An information processing device according to a 36th aspect of the embodiment is the information processing device according to any one of the 19th to 35th aspects, in which
the algorithm used for the machine learning includes at least one of statistical estimation, boosting, reinforcement learning and deep learning using maximum likelihood classification, Boltzmann machine, neural network (NN), support vector machine (SVM), Bayesian network, sparse regression, decision tree or random forest.

An information processing device according to a 37th aspect of the embodiment is the information processing device according to any one of the 19th to 27th aspects, further including:
a first model construction unit that generates the first learned model by performing machine learning on first training data generated by giving a classification label on at least one first evaluation axis, which is an element for determining a combustion state, to first image data in the incinerator imaged by the first imaging device; and/or
a second model construction unit that generates the second learned model by performing machine learning on second training data generated by giving a classification label on at least one second evaluation axis, which is an element for determining a combustion state, to second image data in the incinerator imaged by the second imaging device.

An information processing device according to a 38th aspect of the embodiment is the information processing device according to any one of the 28th to 32nd aspects, further including:
a first model construction unit that generates the first learned model by performing machine learning on first training data generated by giving a classification label on each of two or more first evaluation axes, which are elements for determining a combustion state to first image data in the incinerator imaged by the first imaging device.

A system according to a 39th aspect of the embodiments includes:
an information processing device according to the 35th aspect; and
the crane control device that controls a crane that agitates or transports waste materials on the basis of an operation instruction transmitted from the information processing device, and/or the combustion control device that controls combustion of the waste materials in an incinerator.

An information processing method according to a 40th aspect of the embodiment is an information processing method executed by a computer, the method including:
a step of using a first learned model obtained by machine learning first training data generated by giving a classification label on at least one first evaluation axis, which is an element for determining a combustion state, to first image data in the incinerator imaged by a first imaging device, and performing evaluation on the first evaluation axis with new first image data in the incinerator as an input;
a step of using a second learned model obtained by machine learning second training data generated by giving a classification label on at least one second evaluation axis, which is an element for determining a combustion state, to second image data in an incinerator imaged by a second imaging device, and performing evaluation on the second evaluation axis with new second image data in the incinerator as an input; and
a step of determining a current combustion state by mapping respective evaluation results on the first evaluation axis and the second evaluation axis on a predetermined combustion state determination map having the first evaluation axis and the second evaluation axis as coordinate axes.

An information processing method according to a 41st aspect of the embodiment is an information processing method executed by a computer, the method including:
a step of using a first learned model obtained by machine learning first training data generated by giving a classification label on each of two or more of first evaluation axes, which is an element for determining a combustion state, to first image data in an incinerator imaged by a first imaging device, and performing evaluation on each of the two or more of the first evaluation axes with new image data in the incinerator as an input; and
a step of determining a current combustion state by mapping respective evaluation results on the two or more of the first evaluation axes on a predetermined combustion state determination map having the two or more of the first evaluation axes as coordinate axes.

A storage medium according to a 42nd aspect of the embodiment stores the following information processing program in a non-transitory manner: an information processing program causes a computer to execute:
a step of using a first learned model obtained by machine learning first training data generated by giving a classification label on at least one first evaluation axis, which is an element for determining a combustion state, to first image data in the incinerator imaged by a first imaging device, and performing evaluation on the first evaluation axis with new first image data in the incinerator as an input;
a step of using a second learned model obtained by machine learning second training data generated by giving a classification label on at least one second evaluation axis, which is an element for determining a combustion state, to second image data in an incinerator imaged by a second imaging device, and performing evaluation on the second evaluation axis with new second image data in the incinerator as an input; and
a step of determining a current combustion state by mapping respective evaluation results on the first evaluation axis and the second evaluation axis on a predetermined combustion state determination map having the first evaluation axis and the second evaluation axis as coordinate axes.

A storage medium according to a 43rd aspect of the embodiment stores the following information processing program in a non-transitory manner: an information processing program causes a computer to execute:
a step of using a first learned model obtained by machine learning first training data generated by giving a classification label on each of two or more of first evaluation axes, which is an element for determining a combustion state, to first image data in an incinerator imaged by a first imaging device, and performing evaluation on each of the two or more of the first evaluation axes with new first image data in the incinerator as an input; and
a step of determining a current combustion state by mapping respective evaluation results on the two or more of the first evaluation axes on a predetermined combustion state determination map having the two or more of the first evaluation axes as coordinate axes.

Hereinafter, specific examples of embodiments will be described in detail with reference to the accompanying drawings. In the following description and the drawings used in the following description, the same reference numerals are used for parts that can be configured identically, and redundant description is omitted.

In the present specification, "A and/or B" means one or both of A and B. In addition, in the present specification, "visible light" refers to an electromagnetic wave having a wavelength of 360 nm to 830 nm, and "infrared rays" refers to an electromagnetic wave having a wavelength of 830 nm to 14000 nm.

### (First Embodiment)

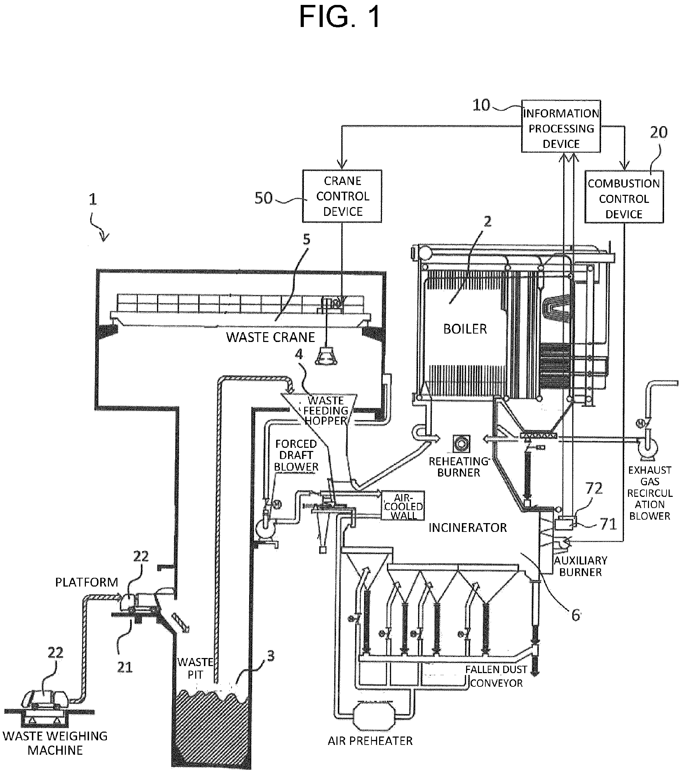

Fig. 1 is a schematic diagram illustrating a configuration of an incineration facility 1 according to a first embodiment.

As illustrated in Fig. 1, the incineration facility 1 includes a platform 21 at which a transport vehicle (waste collection vehicle) 22 carrying waste materials is stopped, a waste pit 3 in which waste materials thrown from the platform 21 is stored, a crane 5 that agitate and transport the waste materials stored in the waste pit 3, a hopper 4 in which the waste materials transported by the crane 5 is thrown, an incinerator 6 that incinerates the waste materials input from the hopper 4, and a waste heat boiler 2 that recovers exhaust heat from exhaust gas generated in the incinerator 6. The type of the incinerator 6 is not limited to a stoker furnace as illustrated in Fig. 1, and includes a fluidized furnace (also referred to as a fluidized bed furnace). Further, the structure of the waste pit 3 is not limited to the one-stage pit as illustrated in Fig. 1, and includes a two-stage pit. Further, the incineration facility 1 is provided with a crane control device 50 that controls the operation of the crane 5 and a combustion control device 20 that controls the combustion of the waste materials (object to be combusted) in the incinerator 6.

The waste materials carried in the state of being loaded on the transport vehicle 22 is thrown into the waste pit 3 from the platform 21 and stored in the waste pit 3. The waste materials stored in the waste pit 3 is agitated by the crane 5, transported to the hopper 4 by the crane 5, thrown into the incinerator 6 via the hopper 4, and incinerated and processed in the incinerator 6.

As illustrated in Fig. 1, the incineration facility 1 according to the present embodiment is provided with an infrared imaging device 71 and a visible light imaging device 72 that image the inside of the incinerator 6, and an information processing device 10 that determines a combustion state in the incinerator 6.

In the illustrated example, the infrared imaging device 71 is installed above the downstream side of the incinerator 6. A plurality of the infrared imaging devices 71 may be installed above the downstream side of the incinerator 6. Note that the installation position of the infrared imaging device 71 is not limited to an upper part on the downstream side of the incinerator 6, and the infrared imaging device 71 may be installed in a horizontal direction on the downstream side of the incinerator 6 or on an upper side or in a horizontal direction on the upstream side thereof. The infrared imaging device 71 is configured so that an imaging wavelength (for example, 3.7 µm to 4.0 µm) is appropriately selected in advance so as to cut a wavelength of flame (for example, 4.1 µm to 4.5 µm), and can acquire an image including an image of an object to be combusted actually being combusted from the upstream side of the incinerator 6 from which the influence of flame is removed as infrared image data (moving image data). The infrared imaging device 71 may be configured so that an imaging wavelength (for example, 3.7 µm to 4.0 µm) is appropriately selected in advance so as to further cut the wavelengths of CO2 and water vapor (for example, 4.0 µm to 4.2 µm) in addition to the wavelength of flame, and an image including an image of an object to be combusted actually being combusted from the upstream side of the incinerator 6 from which the influence of flame and CO2 and water vapor is removed may be acquired as infrared image data (moving image data). The frame rate of the infrared imaging device 71 is not particularly required to be a high frame rate, and may be a general frame rate (about 30 fps) or a low frame rate (about 5 to 10 fps).

In the illustrated example, the visible light imaging device 72 is installed above the downstream side of the incinerator 6, and can acquire visible light image data (moving image data) of a flame state (combustion state) of an object to be combusted on the grate. A plurality of the visible light imaging devices 72 may be installed above the downstream side of the incinerator 6. Note that the installation position of the visible light imaging device 72 is not limited to the upper part on the downstream side of the incinerator 6, and the visible light imaging device 72 may be installed in the horizontal direction on the downstream side of the incinerator 6 or on the upper side or in the horizontal direction on the upstream side thereof. The visible light imaging device 72 may be any one of an RGB camera, a 3D camera, and an RGB-D camera, or may be a combination of two or more thereof. The frame rate of the visible light imaging device 72 is not particularly required to be a high frame rate, and may be a general frame rate (about 30 fps) or a low frame rate (about 5 to 10 fps).

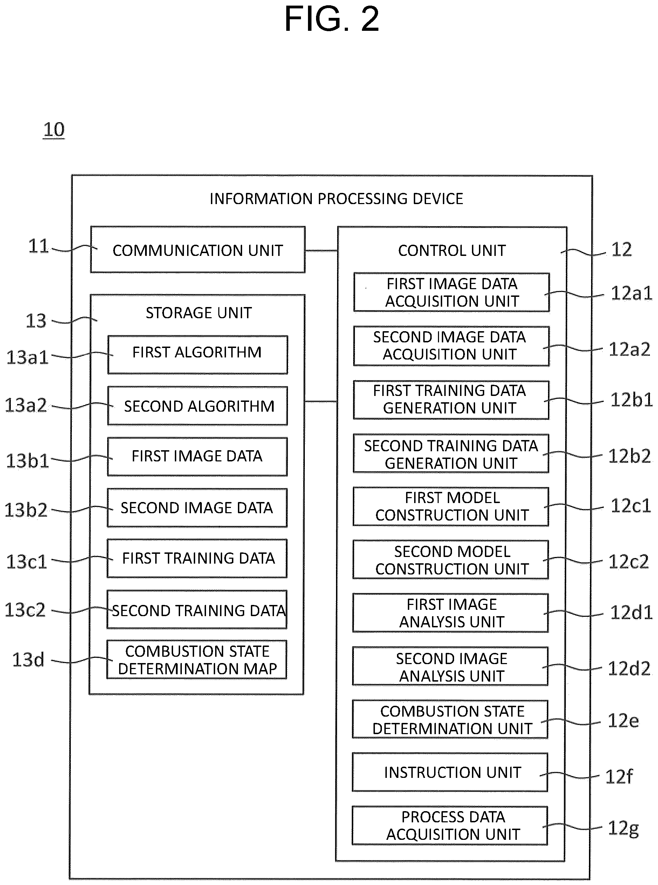

Next, a configuration of the information processing device 10 according to the present embodiment will be described. Fig. 2 is a block diagram illustrating a configuration of the information processing device 10. The information processing device 10 includes one or more computers.

As illustrated in Fig. 2, the information processing device 10 includes a communication unit 11, a control unit 12, and a storage unit 13. The units are communicably connected to each other via a bus or a network.

Among these, the communication unit 11 is a communication interface between each device of the infrared imaging device 71, the visible light imaging device 72, the crane control device 50, and the combustion control device 20 and the information processing device 10. The communication unit 11 transmits and receives information between each device of the infrared imaging device 71, the visible light imaging device 72, the crane control device 50, and the combustion control device 20 and the information processing device 10.

The storage unit 13 is, for example, a non-volatile data storage such as a hard disk or a flash memory. The storage unit 13 stores various data handled by the control unit 12. Further, the storage unit 12 stores a first algorithm 13a1 used by a first model construction unit 12c1 described later for machine learning, a second algorithm 13a2 used by the first model construction unit 12c1 for machine learning, first image data 13b1 acquired by a first image data acquisition unit 12a1, second image data 13b2 acquired by a second image data acquisition unit 12a2, first training data 13c1 generated by a first training data generation unit 12b, second training data 13c2 generated by a second training data generation unit 12b, and a combustion state determination map 13d used by a combustion state determination unit 12e. Details of each piece of information 13a1 to 13d will be described later.

The control unit 12 is a control means that performs various processes of the information processing device 10. As illustrated in Fig. 2, the control unit 11 includes the first image data acquisition unit 12a1, the second image data acquisition unit 12b1, the first training data generation unit 12b1, the second training data generation unit 12b2, the first model construction unit 12c1, a second model construction unit 12c2, a first image analysis unit 12d1, a second image analysis unit 12d2, the combustion state determination unit 12e, an instruction unit 12f, and a process data acquisition unit 12g. These units may be implemented by a processor in the information processing device 10 executing a predetermined program, or may be implemented by hardware.

The first image data acquisition unit 12a1 acquires infrared image data in the incinerator 6 imaged by the infrared imaging device 71 as the first image data 13b1. The first image data 13b1 is stored in the storage unit 13.

The second image data acquisition unit 12a2 acquires visible light image data in the incinerator 6 imaged by the visible light imaging device 72 as the second image data 13b2. The second image data 13b2 is stored in the storage unit 13.

The process data acquisition unit 12g acquires process data (for example, furnace outlet temperature and evaporation amount) measured by various sensors (not illustrated) installed in the incineration facility 1 and/or calculated data obtained by calculation from the process data. The process data and/or the calculated data may be stored in the storage unit 13. The calculated data may include one or two or more of a difference value (which may be an absolute value of the difference value) between an actual process value PV and a setting value SV, a moving average value, a maximum value, a minimum value, a median value, an integral value, a differential value , or a standard deviation in a predetermined period (for example, 1 minute, 10 minutes, 20 minutes, or 1 hour), or a difference value (which may be an absolute value of the difference value) from the value a predetermined time ago .

The first training data generation unit 12b1 generates the first training data 13c1 by associating a classification label on at least one first evaluation axis, which is an element for determining the combustion state, artificially given to the first image data 13b1 by the operator on the basis of the empirical rule. The first training data generation unit 12b1 may divide the first image data 13b1 into a plurality of blocks (for example, a drying area, a gasification and combustion area, and a surface combustion area in a burning process), and generate the first training data 13c1 by associating the classification label on at least one first evaluation axis, which is an element for determining the combustion state, artificially given to data in units of blocks by the operator on the basis of the empirical rule. The first training data 13c1 is stored in the storage unit 13. Here, the classification label may be absolute classification information (classification determined by a relationship with respect to a predetermined absolute reference (threshold)) on the first evaluation axis, or may be a relative order (relative order relationship in a group including a plurality of pieces of infrared image data) on the first evaluation axis among a plurality of pieces of infrared image data. The first evaluation axis may include at least one of the amount of the object to be combusted, the quality of the object to be combusted, the type of the object to be combusted, the temperature of the object to be combusted, the combustion gas generation amount (CO, or the like), and the temperature of the wall of the incinerator. The amount of the object to be combusted is, for example, a value corresponding to the volume, weight, density, cross-sectional area, and the like of the object to be combusted. The quality of the object to be combusted is, for example, a value corresponding to flammability, a calorific value, moisture, density, and the like of the object to be combusted. The type of the object to be combusted is, for example, unbroken waste bags, paper waste, pruned branches, futons, sludge, shredded oversized waste, cardboards, hemp bags, paper bags, bottom waste (waste that exists near the bottom in the waste pit 3, is compressed by waste materials above, and has a high moisture content), wood waste, textile waste, clothing waste, plastic waste, animal residue, animal corpse, kitchen waste, vegetation, soil, medical waste, incineration ash, bicycles, chests, beds, shelves, desks, chairs, agricultural vinyl, PET bottles, styrene foams, meat and bone meal, agricultural products, ceramics, glass scrap, metal scrap, debris, concrete scrap, tatami mat, bamboo, straw, and activated carbon. The temperature of the object to be combusted is, for example, a value corresponding to the temperature of the object to be combusted. The combustion gas generation amount is, for example, a value corresponding to a gas generation amount generated in the process of a combustion process such as CO, hydrogen, hydrocarbon, NOx, SOx, HCl, or dioxin. The temperature of the wall of the incinerator is, for example, a value corresponding to the temperature of the wall or ceiling of the incinerator.

As an example, in a case where the amount of the object to be combusted is set as the first evaluation axis, the classification label may be large, normal, or small (absolute information) (the types of labels may be increased), or may be obtained by ordering the magnitude of the amount of the object to be combusted for a plurality of pieces of the first image data (relative information). As another example, in a case where the quality of the object to be combusted is set as an evaluation axis, the classification label may be ordinary waste, high-calorific value waste (that is, high-calorie waste), low-calorific value waste (that is, low-calorie waste) (absolute information) (the types of labels may be increased), or may be obtained by ordering superiority and inferiority of the quality of the object to be combusted for the plurality of pieces of the first image data (relative information). As another example, in a case where the type of the object to be combusted is set as the first evaluation axis, the classification label may be a waste in unbroken waste bags, a pruned branch, or a futon (absolute information) (the types of labels may be increased). As another example, in a case where the combustion gas generation amount (CO or the like) is set as an evaluation axis, the classification label may be large, normal, or small (absolute information) (the types of labels may be increased), or may be obtained by ordering the magnitude of the combustion gas generation amount (CO or the like) for a plurality of pieces of the first image data (relative information). As another example, in a case where the temperature of the wall of the incinerator is set as the first evaluation axis, the classification label may be high, normal, or low (the types of labels may be increased), or may be obtained by ordering the level of the temperature of the wall of the incinerator for the plurality of pieces of the first image data (relative information).

The first training data generation unit 12b1 may generate the first training data 13c1 by associating a classification label on the first evaluation axis artificially given by the operator on the basis of the empirical rule to a combination of the first image data 13b1 and process data obtained from various sensors (not illustrated) installed in the incineration facility 1 and/or a calculated value obtained by calculation from the process data. Here, the process data is data in consideration of a time lag between the imaging time of the first image data and the response time of the sensor. The time lag may be appropriately determined on the basis of a response speed of the sensor, an installation position of the sensor in the facility, an experiment, a simulation, and the empirical rule of the operator.

The second training data generation unit 12b2 generates the second training data 13c2 by associating a classification label on at least one second evaluation axis, which is an element for determining the combustion state, artificially given to the second image data 13b1 by the operator on the basis of the empirical rule. The second training data generation unit 12b2 may divide the second image data 13b1 into a plurality of blocks (for example, a drying area, a gasification and combustion area, and a surface combustion area in a burning process), and generate the second training data 13c2 by associating the classification label on at least one first evaluation axis, which is an element for determining the combustion state, artificially given to data in units of blocks by the operator on the basis of the empirical rule. The second training data 13c2 is stored in the storage unit 13. Here, the classification label may be absolute classification information (classification determined by a relationship with respect to a predetermined absolute reference (threshold)) on the second evaluation axis, or may be a relative order (relative order relationship in a group including a plurality of pieces of visible light image data) on the second evaluation axis among a plurality of pieces of visible light image data. The second evaluation axis may include at least one of a flame state, a position of a combustion completion point (burning out point), a shape of the combustion completion point, an amount of the object to be combusted, quality of the object to be combusted, a type of the object to be combusted, an amount of the unburned object, and an amount of incineration ash. The flame state is, for example, a value corresponding to strength of flame, luminance of flame, and the like. The position of the combustion completion point is, for example, a value corresponding to the position on the grate constituting the incinerator. The shape of the combustion completion point is, for example, a value corresponding to a curvature, a curvature radius, or the like of the combustion completion point. The amount of the object to be combusted is, for example, a value corresponding to the volume, weight, density, cross-sectional area, and the like of the object to be combusted. The quality of the object to be combusted is, for example, a value corresponding to flammability, a calorific value, moisture, density, and the like of the object to be combusted. The type of the object to be combusted is, for example, unbroken waste bags, paper waste, pruned branches, futons, sludge, shredded oversized waste, cardboards, hemp bags, paper bags, bottom waste (waste that exists near the bottom in the waste pit 3, is compressed by waste materials above, and has a high moisture content), wood waste, textile waste, clothing waste, plastic waste, animal residue, animal corpse, kitchen waste, vegetation, soil, medical waste, incineration ash, bicycles, chests, beds, shelves, desks, chairs, agricultural vinyl, PET bottles, styrene foams, meat and bone meal, agricultural products, ceramics, glass scrap, metal scrap, debris, concrete scrap, tatami mat, bamboo, straw, and activated carbon. The amount of unburned object is, for example, a value corresponding to the volume, weight, density, cross-sectional area, amount, and the like of the unburned object. The amount of incineration ash is, for example, a value corresponding to the volume, weight, density, cross-sectional area, and the like of the incineration ash.

As an example, in a case where the flame state is set as the second evaluation axis, the classification label may be good, normal, or poor (absolute information) (the types of labels may be increased), or may be obtained by ordering superiority and inferiority of the flame state for a plurality of (for example, two) pieces of second image data (relative information). As another example, in a case where the position of the combustion completion point (burning out point) is set as an evaluation axis, the classification label may be near, slightly near, normal, slightly far, or far (the types of labels may be increased), or the perspective of the position of the combustion completion point may be ordered for the plurality of pieces of the second image data. As another example, in a case where the shape of the combustion completion point is set as an evaluation axis, the classification label may be good, normal, or poor (the types of labels may be increased), or superiority and inferiority of the shape of the combustion completion point may be ordered for the plurality of pieces of the second image data. As another example, in a case where the amount of the object to be combusted is set as the second evaluation axis, the classification label may be large, normal, or small (the types of labels may be increased), or the magnitude of the amount of the object to be combusted may be ordered for the plurality of pieces of the second image data. As another example, in a case where the quality of the object to be combusted is set as the second evaluation axis, the classification label may be ordinary waste, high-calorific value waste (that is, high-calorie waste), or low-calorific value waste (that is, low-calorie waste) (the types of labels may be increased), or superiority and inferiority of the quality of the object to be combusted may be ordered for the plurality of pieces of the second image data. As another example, when the type of the object to be combusted is set as the second evaluation axis, the classification label may be a waste in unbroken waste bags, a pruned branch, or a futon (the types of labels may be increased). As another example, in a case where the amount of the unburned object is set as the second evaluation axis, the classification label may be large, normal, or small (the types of labels may be increased), or the magnitude of the amount of the unburned object may be ordered for the plurality of pieces of the second image data. As another example, in a case where the amount of incineration ash is set as the second evaluation axis, the classification label may be large, normal, or small (the types of labels may be increased), or the magnitude of the amount of incineration ash may be ordered for the plurality of pieces of the second image data.

The second training data generation unit 12b2 may generate the second training data 13c2 by associating a classification label on the second evaluation axis artificially given by the operator on the basis of the empirical rule to a combination of the second image data 13b2 and process data obtained from various sensors (not illustrated) installed in the incineration facility 1 and/or a calculated value obtained by calculation from the process data. Here, the process data is data in consideration of a time lag between the imaging time of the second image data and the response time of the sensor. The time lag may be appropriately determined on the basis of a response speed of the sensor, an installation position of the sensor in the facility, an experiment, a simulation, and the empirical rule of the operator.

The first image data 13b1 and/or the second image data 13b2 may be moving image data within 60 seconds or may be moving image data within 30 seconds. According to findings by the present inventors, the combustion state in the incinerator 6 changes in five to ten seconds. Therefore, for example, by using moving image data within 60 seconds (or within 30 seconds) as one segment of data as the first image data 13b1 and/or the second image data 13b2, it is possible to more accurately classify, predict, and estimate the combustion state in the incinerator 6.

In addition, the first image data 13b1 and/or the second image data 13b2 may be moving image data for five seconds or more or may be seven seconds or more. While the combustion state in the incinerator 6 changes in five to ten seconds, moving image data of, for example, five seconds or more (or seven seconds or more) is used as one segment of data as the first image data 13b1 and/or the second image data 13b2, so that the combustion state in the incinerator 6 can be classified, predicted, and estimated more accurately.

The first model construction unit 13c1 generates a first learned model by performing machine learning on the first training data 13b1 generated by the first training data generation unit 12b1 using the first algorithm 13a1. The first algorithm 13a1 used for machine learning may include at least one of statistical estimation, boosting, reinforcement learning and deep learning using maximum likelihood classification, Boltzmann machine, neural network (NN), support vector machine (SVM), Bayesian network, sparse regression, decision tree or random forest.

Similarly, the second model construction unit 13c2 generates a second learned model by performing machine learning on the second training data 13b2 generated by the second training data generation unit 12b2 using the second algorithm 13a2. The second algorithm 13a2 used for machine learning may include at least one of statistical estimation, boosting, reinforcement learning and deep learning using maximum likelihood classification, Boltzmann machine, neural network (NN), support vector machine (SVM), Bayesian network, sparse regression, decision tree or random forest.

The first image analysis unit 13d1 uses new first image data (infrared image data) in the incinerator 6 acquired by the first image data acquisition unit 13a1 as an input, and acquires an evaluation result on the first evaluation axis (for example, the amount of the object to be combusted) as output data by using the first learned model generated by the first model construction unit 13c1. The first image analysis unit 13d1 may normalize (score) the evaluation result on the first evaluation axis to, for example, a numerical range of 0 to 100 and acquire a numerical value (score) within the range as output data.

The second image analysis unit 13d2 uses new second image data (visible light image data) in the incinerator 6 acquired by the second image data acquisition unit 13a2 as an input, and acquires an evaluation result on the second evaluation axis (for example, flame state) as output data by using the second learned model generated by the second model construction unit 13c2. The second image analysis unit 13d2 may normalize (score) the evaluation result on the second evaluation axis to, for example, a numerical range of 0 to 100 and acquire a numerical value (score) within the range as output data.

The combustion state determination unit 12e determines the current combustion state in the incinerator 6 on the basis of the evaluation result (score) on the first evaluation axis by the first image analysis unit 13d1 and the evaluation result (score) on the second evaluation axis by the second image analysis unit 13d2. The determination result of the combustion state may be a label indicating characteristics of the combustion state (overcombustion, thick waste layer combustion, thin waste layer combustion, waste shortage, low-calorific value waste combustion, and the like), or may be a result obtained by changing a numerical value of the label. The overcombustion is a combustion state in which combustion is active, for example, a large amount of high-calorific value (easily flammable) waste is present among objects to be combusted and the combustion temperature becomes very high, or the like. The thick waste layer combustion is, for example, a combustion state in which the amount of the object to be combusted is larger than in a normal time. The thin waste layer combustion is, for example, a combustion state in which the amount of the object to be combusted is smaller than that in a normal time. The waste shortage is, for example, a combustion state in which the amount of the object to be combusted is extremely smaller than that in a normal time and the combustion temperature is lowered. The low-calorific value waste combustion is, for example, a combustion state in which there is a large amount of low-calorific value (low calorie waste or the like) waste in the object to be combusted and combustion is weak, such as a low combustion temperature.

The combustion state determination unit 12e may determine the current combustion state in the incinerator 6 by mapping a set (X, Y) including an evaluation result (X) on the first evaluation axis and an evaluation result (Y) on the second evaluation axis onto the predetermined combustion state determination map 13d with the first evaluation axis as the X coordinate axis and the second evaluation axis as the Y coordinate axis. The combustion state determination unit 12e may determine the current combustion state in the incinerator 6 by mapping a set (X, Y, Z ...) including evaluation results on one or more first evaluation axes and evaluation results on one or more second evaluation axes onto, for example, the combustion state determination map 13d in a predetermined N-dimensional space (N is an integer of 3 or more) in which one of the first evaluation axes is an X coordinate axis, another one of the first evaluation axes is a Y coordinate axis, and one of the second evaluation axes is a Z coordinate axis.

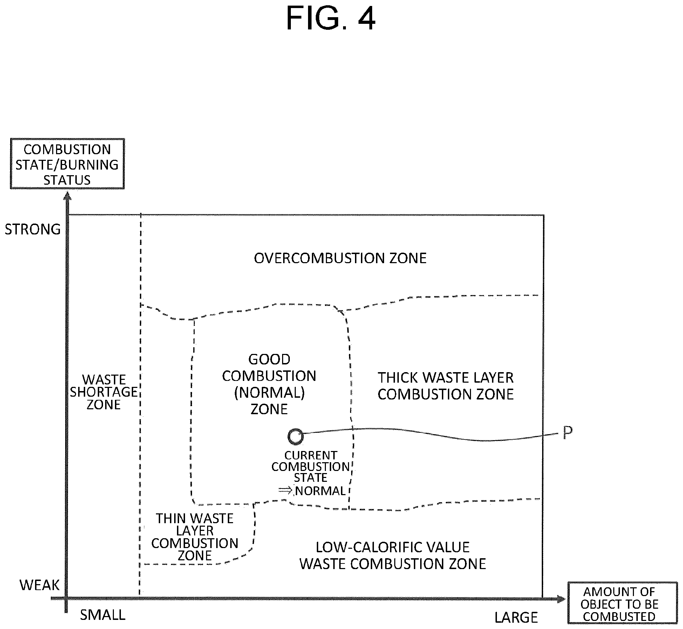

Fig. 4 is a diagram illustrating an example of the combustion state determination map 13d. In the combustion state determination map 13d illustrated in Fig. 4, an XY coordinate plane with the amount of the object to be combusted as an X coordinate axis and the flame state as a Y coordinate axis is divided into a plurality of areas (in the illustrated example, there are six zones: a waste shortage zone, an overcombustion zone, a thin waste layer combustion zone, a good combustion (normal) zone, a thick waste layer combustion, and a low-calorific value waste combustion). The combustion state determination unit 12e maps, on the combustion state determination map 13d, a set (X, Y) including an evaluation result (X) on the first evaluation axis and an evaluation result (Y) on the second evaluation axis when the amount of the object to be combusted is the first evaluation axis and the flame state is set as the second evaluation axis. For example, as illustrated in Fig. 4, when a point P indicating a set (X, Y) including the evaluation result (X) on the first evaluation axis and the evaluation result (Y) on the second evaluation axis is mapped in the good combustion (normal) zone, the combustion state determination unit 12e determines that the current combustion state is "good combustion (normal)". The range (threshold (position, length, and shape of boundary line)) of the area may be determined from the empirical rule of the operator, or may be determined by performing machine learning on a correspondence relationship between the evaluation result (X) on the first evaluation axis and the evaluation result (Y) on the second evaluation axis and the process data by using an algorithm including at least one of statistical estimation, Kalman filter, autoregressive, boosting, reinforcement learning and deep learning using maximum likelihood classification, Boltzmann machine, neural network (NN), support vector machine (SVM), Bayesian network, sparse regression, decision tree or random forest.

The combustion state determination unit 12e may correct the determination result of the combustion state according to process data obtained from various sensors (not illustrated) installed in the facility and/or a calculated value obtained by calculation from the process data. For example, when the determination result of the combustion state is "low-calorific value waste combustion" and the furnace outlet temperature or the difference value PV-SV of the evaporation amount at that time satisfies a predetermined condition, the determination result of the combustion state may be corrected to "good combustion (normal)".

The combustion state determination unit 12e may display an alert indicating that it is difficult to keep a performance management index value within a predetermined range on a display (not illustrated) or may issue an alert by voice, vibration, light, or the like according to the determination result of the combustion state.

The instruction unit 12f transmits an operation instruction to the crane control device 50 and/or the combustion control device 20 on the basis of the determination result of the combustion state determination unit 12e. For example, the instruction unit 12f transmits an operation instruction defined in advance for each zone on the combustion state determination map to the crane control device 50 and/or the combustion control device 20 on the basis of the determination result of the combustion state determination unit 12e. Specifically, for example, the instruction unit 12f transmits an operation instruction (increasing or decreasing the combustion temperature, increasing or decreasing the combustion time, increasing or decreasing the amount of air, increasing or decreasing the waste feeding amount) suitable for the current combustion state to the combustion control device 20. As an example, when the current combustion state is "overcombustion", the instruction unit 12f may transmit, to combustion control device 20, an operation instruction such as a decrease in the amount of air or a decrease in the waste feeding amount. As another example, when the current combustion state is "thick waste layer combustion", the instruction unit 12f may transmit, to combustion control device 20, an operation instruction such as a decrease in the waste feeding amount in order to decrease the thickness of the waste layer. In addition, as another example, when the current combustion state is "thin waste layer combustion", the instruction unit 12f may transmit, to combustion control device 20, an operation instruction such as a decrease in the amount of air or a decrease in the waste feeding amount in order to increase the thickness of the waste layer. Further, as another example, when the current combustion state is "waste shortage", the instruction unit 12f may transmit, to the combustion control device 20, an operation instruction such as a decrease in the amount of air or an increase in the amount of waste fed in order to increase the amount of waste in the incinerator. In addition, as another example, when the current combustion state is "low-calorific value waste combustion", the instruction unit 12f may transmit, to combustion control device 20, an operation instruction such as an increase in the amount of air or a decrease in the waste feeding amount in order to firmly burn the current waste.

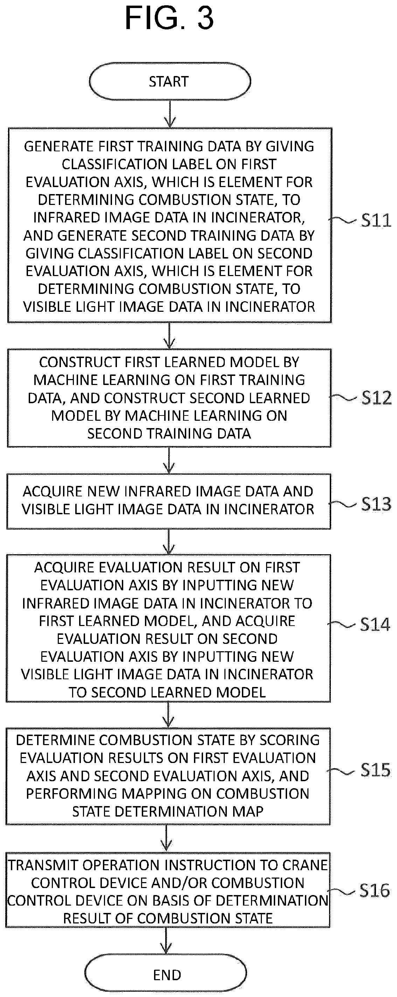

Next, an example of an information processing method by the information processing device 10 having such a configuration will be described. Fig. 3 is a flowchart illustrating an example of an information processing method.

As illustrated in Fig. 3, first, before the operation of the incineration facility 1, the first training data generation unit 12b1 generates first training data 13c1 by associating the classification label on at least one first evaluation axis, which is an element for determining the combustion state, artificially given by the operator on the basis of the empirical rule to the past infrared image data (first image data 13b1) in the incinerator 6 imaged by the infrared imaging device 71. In addition, the second training data generation unit 12b2 generates the second training data 13c2 by associating a classification label on at least one second evaluation axis, which is an element for determining the combustion state, artificially given by the operator on the basis of the empirical rule to the past visible light image data (second image data 13b2) in the incinerator 6 imaged by the visible light imaging device 72 (step S11).

Next, the first model construction unit 13c1 generates a first learned model by performing machine learning on the first training data 13b1 generated by the first training data generation unit 12b1 using the first algorithm 13a1. In addition, the second model construction unit 13c2 generates a second learned model by performing machine learning on the second training data 13b2 generated by the second training data generation unit 12b2 using the second algorithm 13a2 (step S12).

Next, during operation of the incineration facility 1, the first image data acquisition unit 12a1 acquires new infrared image data in the incinerator 6 imaged by the infrared imaging device 71 as the first image data 13b1, and the second image data acquisition unit 12a2 acquires visible light image data in the incinerator 6 imaged by the visible light imaging device 72 as the second image data 13b2 (step S13).

Next, the first image analysis unit 13d1 uses new first image data (infrared image data) in the incinerator 6 acquired by the first image data acquisition unit 13a1 as an input, and acquires an evaluation result on the first evaluation axis (for example, the amount of the object to be combusted) as output data by using the first learned model generated by the first model construction unit 13c1. In addition, the second image analysis unit 13d2 uses new second image data (visible light image data) in the incinerator 6 acquired by the second image data acquisition unit 13a2 as an input, and acquires the evaluation result on the second evaluation axis (for example, flame state) as output data by using the second learned model generated by the second model construction unit 13c2 (step S14).

Then, the combustion state determination unit 12e determines the current combustion state in the incinerator 6 on the basis of the evaluation result on the first evaluation axis by the first image analysis unit 13d1 and the evaluation result on the second evaluation axis by the second image analysis unit 13d2 (step 15).

In step S15, the combustion state determination unit 12e may determine the current combustion state in the incinerator 6 by mapping a set (X, Y) including the evaluation result (X) on the first evaluation axis and the evaluation result (Y) on the second evaluation axis onto the predetermined combustion state determination map 13d with the first evaluation axis as the X coordinate axis and the second evaluation axis as the Y coordinate axis (see Fig. 4).

Thereafter, the instruction unit 12f transmits an operation instruction to the crane control device 50 and/or the combustion control device 20 on the basis of the determination result of the combustion state determination unit 12e (step S16).

According to the present embodiment as described above, by appropriately selecting the imaging wavelength, the infrared imaging device 71 can acquire, as the infrared image data (first image data) in the incinerator 6, an image including an image of an object to be combusted actually being combusted from the upstream side of the incinerator 6 from which the influence of flame has been removed, and thus, by evaluating the combustion state on at least one first evaluation axis, which is an element for determining the combustion state, using the infrared image data in the incinerator 6 and determining the combustion state on the basis of the evaluation result, the combustion state in the incinerator 6 can be classified, predicted, and estimated more accurately as compared with a case where classification, prediction, and estimation of the combustion state and prediction and estimation of the process value are performed only from the combustion image from which only the situation of flame can be grasped.

Further, according to the present embodiment, by determining the combustion state on the basis of respective evaluation results on the first evaluation axis X and the second evaluation axis Y, the combustion state in the incinerator 6 can be accurately classified, predicted, and estimated as compared with a case where the combustion state is determined on the basis of the evaluation result on one evaluation axis. In addition, by determining the combustion state by mapping the respective evaluation results on the first evaluation axis X and the second evaluation axis Y on the combustion state determination map 13d, it is possible to intuitively grasp the relationship between the respective evaluation results on the first evaluation axis X and the second evaluation axis Y and the combustion state that is the determination result, and to determine the combustion state at high speed.

### (Second Embodiment)

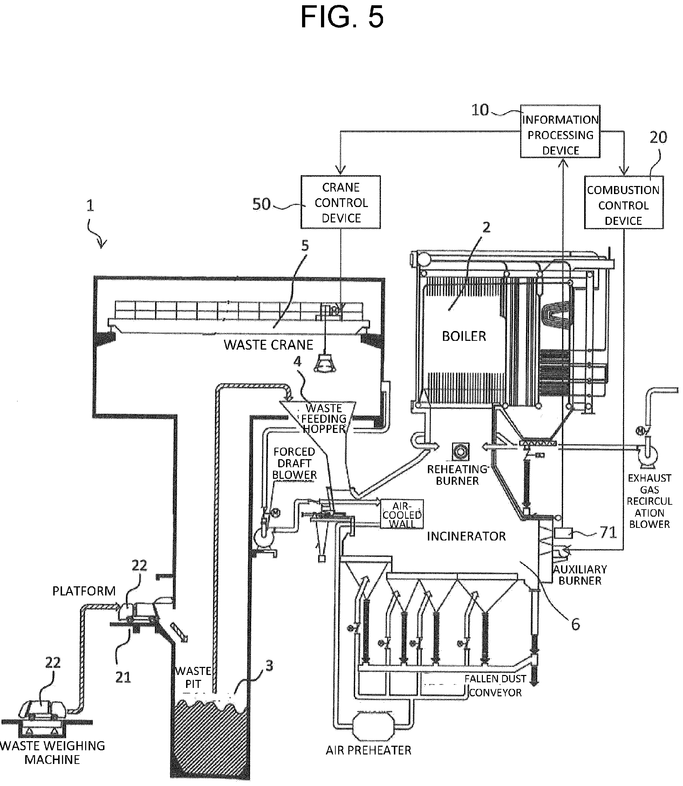

Next, a second embodiment will be described with reference to Fig. 5 to 7. Fig. 5 is a schematic diagram illustrating a configuration of an incineration facility 1 according to the second embodiment.

As illustrated in Fig. 5, the incineration facility 1 according to the second embodiment is different from the first embodiment only in that the visible light imaging device 72 that images the inside of the incinerator 6 is omitted, and the other configurations are similar to those of the first embodiment.

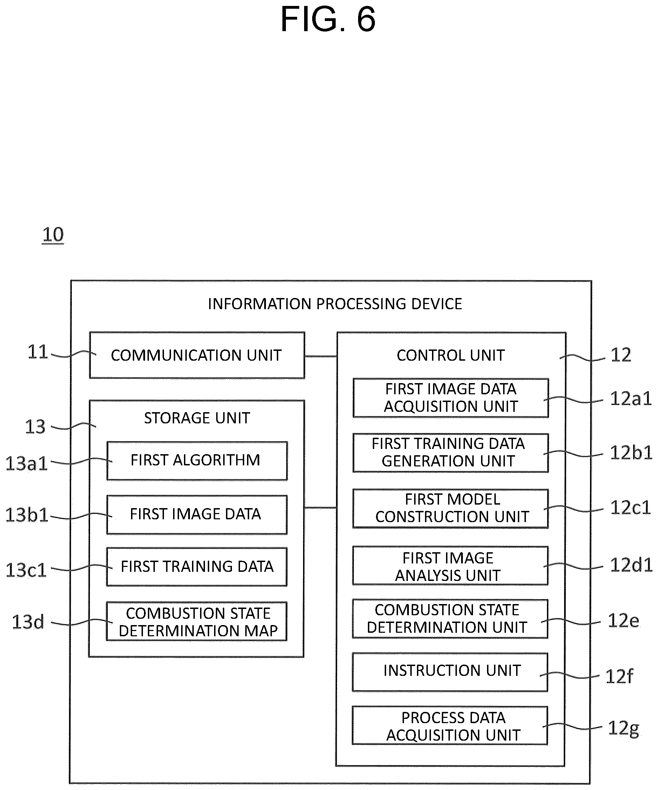

Fig. 6 is a block diagram illustrating a configuration of the information processing device 10 according to the second embodiment. The information processing device 10 includes one or more computers.

As illustrated in Fig. 6, the information processing device 10 includes a communication unit 11, a control unit 12, and a storage unit 13. The units are communicably connected to each other via a bus or a network.

Among these, the communication unit 11 is a communication interface between each device of the infrared imaging device 71, the crane control device 50, and the combustion control device 20 and the information processing device 10. The communication unit 11 transmits and receives information between each device of the infrared imaging device 71, the crane control device 50, and the combustion control device 20 and the information processing device 10.

The storage unit 13 is, for example, a non-volatile data storage such as a hard disk or a flash memory. The storage unit 13 stores various data handled by the control unit 12. In addition, the storage unit 12 stores a first algorithm 13a1 used for machine learning by a first model construction unit 12c1 described later, first image data 13b1 acquired by the first image data acquisition unit 12a1, first training data 13c1 generated by the first training data generation unit 12b1, and a combustion state determination map 13d used by the combustion state determination unit 12e. Details of each piece of information 13a1 to 13d will be described later.

The control unit 12 is a control means that performs various processes of the information processing device 10. As illustrated in Fig. 6, the control unit 11 includes the first image data acquisition unit 12a1, the first training data generation unit 12b1, the first model construction unit 12c1, the first image analysis unit 12d1, the combustion state determination unit 12e, the instruction unit 12f, and the process data acquisition unit 12g. These units may be implemented by a processor in the information processing device 10 executing a predetermined program, or may be implemented by hardware.

Among them, the configurations of the first image data acquisition unit 12a1, the process data acquisition unit 12g, and the instruction unit 12f are similar to those of the first embodiment, and the description thereof will be omitted.

The first training data generation unit 12b1 generates the first training data 13c1 by associating respective classification labels on the two or more first evaluation axes, which are elements for determining the combustion state, artificially given by the operator on the basis of the empirical rule to the first image data 13b1. The first training data 13c1 is stored in the storage unit 13. Here, the classification label may be absolute classification information (classification determined by a relationship with respect to a predetermined absolute reference (threshold)) on the first evaluation axis, or may be a relative order (relative order relationship in a group including a plurality of pieces of infrared image data) on the first evaluation axis among a plurality of pieces of infrared image data. The first evaluation axis may include two or more of the flame state, the amount of the object to be combusted, the quality of the object to be combusted, the type of the object to be combusted, the temperature of the object to be combusted, the combustion gas generation amount (CO, or the like), and the temperature of the wall of the incinerator. The flame state can be determined from the amount of gaseous fluctuation appearing in the first image data 13b1 (infrared image data).

As an example, in a case where the flame state is set as one first evaluation axis, the classification label may be good, normal, or poor (absolute information) (the types of labels may be increased), or may be obtained by ordering the superiority and inferiority of the flame state for the plurality of pieces of the first image data (relative information). As another example, in a case where the amount of the object to be combusted is set as one first evaluation axis, the classification label may be large, normal, or small (absolute information) (the types of labels may be increased), or may be obtained by ordering the magnitude of the amount of the object to be combusted for the plurality of pieces of the first image data (relative information). As another example, in a case where the quality of the object to be combusted is set as one first evaluation axis, the classification label may be ordinary waste, high-calorific value waste (that is, high-calorie waste), or low-calorific value waste (that is, low-calorie waste) (absolute information) (the types of labels may be increased), or may be one (relative information) obtained by ordering the superiority and inferiority of the quality of the object to be combusted for the plurality of pieces of the first image data. As another example, in a case where the type of the object to be combusted is set as one first evaluation axis, the classification label may be a waste in unbroken waste bags, a pruned branch, and a futon (absolute information) (the types of labels may be increased). As another example, in a case where the combustion gas generation amount (CO or the like) is set as one first evaluation axis, the classification label may be large, normal, or small (absolute information) (the types of labels may be increased), or may be obtained by ordering the magnitude of the combustion gas generation amount (CO or the like) for the plurality of pieces of the first image data (relative information). As another example, in a case where the temperature of the wall of the incinerator is set as one first evaluation axis, the classification label may be high, normal, or low (the types of labels may be increased), or may be obtained by ordering the level of the temperature of the wall of the incinerator for the plurality of pieces of the first image data (relative information).

The first training data generation unit 12b1 may generate the first training data 13c1 by associating respective classification labels on two or more first evaluation axes artificially given by the operator on the basis of the empirical rule to a combination of the first image data 13b1 and process data obtained from various sensors (not illustrated) installed in the incineration facility 1 and/or a calculated value obtained by calculation from the process data. Here, the process data is data in consideration of a time lag between the imaging time of the first image data and the response time of the sensor. The time lag may be appropriately determined on the basis of a response speed of the sensor, an installation position of the sensor in the facility, an experiment, a simulation, and the empirical rule of the operator.

The first image data 13b1 may be moving image data within 60 seconds or may be moving image data within 30 seconds. According to findings by the present inventors, the combustion state in the incinerator 6 changes in five to ten seconds. Therefore, for example, by using moving image data within 60 seconds (or within 30 seconds) as one segment of data as the first image data 13b1, it is possible to more accurately classify, predict, and estimate the combustion state in the incinerator 6.

In addition, the first image data 13b1 may be moving image data for five seconds or more or may be seven seconds or more. While the combustion state in the incinerator 6 changes in five to ten seconds, for example, moving image data of five seconds or more (or seven seconds or more) is used as one segment of data as the first image data 13b1, so that the combustion state in the incinerator 6 can be classified, predicted, and estimated more accurately.

The first model construction unit 13c1 generates a first learned model by performing machine learning on the first training data 13b1 generated by the first training data generation unit 12b1 using the first algorithm 13a1. The first algorithm 13a1 used for machine learning may include at least one of statistical estimation, boosting, reinforcement learning and deep learning using maximum likelihood classification, Boltzmann machine, neural network (NN), support vector machine (SVM), Bayesian network, sparse regression, decision tree or random forest.

The first image analysis unit 13d1 uses new first image data (infrared image data) in the incinerator 6 acquired by the first image data acquisition unit 13a1 as an input, and acquires respective evaluation results on the two or more first evaluation axes (for example, the flame state and the amount of the object to be combusted) as output data by using the first learned model generated by the first model construction unit 13c1. The first image analysis unit 13d1 may normalize (score) the respective evaluation results on the two or more first evaluation axes to, for example, a numerical range of 0 to 100 and acquire a numerical value (score) within the range as output data.

The combustion state determination unit 12e determines the current combustion state in the incinerator 6 on the basis of respective evaluation result (score) on the two or more first evaluation axes by the first image analysis unit 13d1. The determination result of the combustion state may be a label indicating characteristics of the combustion state (overcombustion, thick waste layer combustion, thin waste layer combustion, waste shortage, low-calorific value waste combustion, and the like), or may be a result obtained by changing a numerical value of the label.

The combustion state determination unit 12e may determine the current combustion state in the incinerator 6 by mapping a set of respective evaluation results on the two or more first evaluation axes onto the predetermined combustion state determination map 13d having the two or more first evaluation axes as coordinate axes.

Fig. 4 is a diagram illustrating an example of the combustion state determination map 13d. In the combustion state determination map 13d illustrated in Fig. 4, an XY coordinate plane with the amount of the object to be combusted as an X coordinate axis and the flame state as a Y coordinate axis is divided into a plurality of areas (in the illustrated example, there are six zones: a waste shortage zone, an overcombustion zone, a thin waste layer combustion zone, a good combustion (normal) zone, a thick waste layer combustion zone, and a low-calorific value waste combustion zone). The combustion state determination unit 12e maps, on the combustion state determination map 13d, a set (X, Y) including evaluation results on the respective first evaluation axes when the amount of the object to be combusted and the flame state are set as two different first evaluation axes. For example, as illustrated in Fig. 4, when a point P indicating a set (X, Y) including the evaluation result (X) obtained when the amount of the object to be combusted is set as the first evaluation axis and the evaluation result (Y) obtained when the flame state is set as the first evaluation axis is mapped in the good combustion (normal) zone, the combustion state determination unit 12e determines that the current combustion state is "good combustion (normal)".

The combustion state determination unit 12e may correct the determination result of the combustion state according to process data obtained from various sensors (not illustrated) installed in the facility and/or a calculated value obtained by calculation from the process data. For example, when the determination result of the combustion state is "low-calorific value waste combustion" and the furnace outlet temperature or the difference value PV-SV of the evaporation amount at that time satisfies a predetermined condition, the determination result of the combustion state may be corrected to "good combustion (normal)".

The combustion state determination unit 12e may display an alert indicating that it is difficult to keep the performance management index value within a predetermined range on a display (not illustrated) or may issue an alert by voice, vibration, light, or the like according to the determination result of the combustion state.

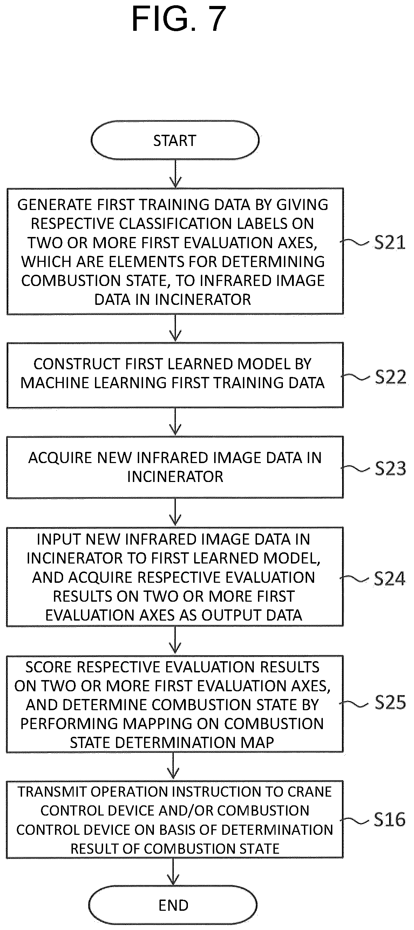

Next, an example of an information processing method by the information processing device 10 having such a configuration will be described. Fig. 7 is a flowchart illustrating an example of an information processing method.

As illustrated in Fig. 7, first, before the operation of the incineration facility 1, the first training data generation unit 12b1 generates the first training data 13c1 by associating classification labels on two or more first evaluation axes, which are elements for determining the combustion state, artificially given by the operator on the basis of the empirical rule to the past infrared image data (first image data 13b1) in the incinerator 6 imaged by the infrared imaging device 71 (step S21).

Next, the first model construction unit 13c1 generates a first learned model by performing machine learning on the first training data 13b1 generated by the first training data generation unit 12b1 using the first algorithm 13a1 (step S22).

Next, during the operation of the incineration facility 1, the first image data acquisition unit 12a1 acquires new infrared image data in the incinerator 6 imaged by the infrared imaging device 71 as the first image data 13b1 (step S23).

Next, the first image analysis unit 13d1 uses new first image data (infrared image data) in the incinerator 6 acquired by the first image data acquisition unit 13a1 as an input, and acquires respective evaluation results on the two or more first evaluation axes (for example, the amount of the object to be combusted and the flame state) as output data by using the first learned model generated by the first model construction unit 13c1 (step S24).

Then, the combustion state determination unit 12e determines the current combustion state in the incinerator 6 on the basis of the evaluation result on the first evaluation axis by the first image analysis unit 13d1 (step 25).

In step S25, the combustion state determination unit 12e may determine the current combustion state in the incinerator 6 by mapping a set of respective evaluation results on the two or more first evaluation axes onto the predetermined combustion state determination map 13d having the two or more first evaluation axes as coordinate axes (see Fig. 4).

Thereafter, the instruction unit 12f transmits an operation instruction to the crane control device 50 and/or the combustion control device 20 on the basis of the determination result of the combustion state determination unit 12e (step S16).

According to the present embodiment as described above, by appropriately selecting the imaging wavelength, the infrared imaging device 71 can acquire, as the infrared image data (first image data) in the incinerator 6, an image including an image of an object to be combusted actually being combusted from the upstream side of the incinerator 6 from which the influence of flame has been removed, and thus, by evaluating the combustion state on two or more first evaluation axes, which are elements for determining the combustion state, using the infrared image data in the incinerator 6 and determining the combustion state on the basis of the evaluation result, the combustion state in the incinerator 6 can be classified, predicted, and estimated more accurately as compared with a case where classification, prediction, and estimation of the combustion state and prediction and estimation of the process value are performed only from the combustion image from which only the situation of flame can be grasped.

Further, according to the present embodiment, by determining the combustion state on the basis of respective evaluation results on the two or more first evaluation axes, the combustion state in the incinerator 6 can be accurately classified, predicted, and estimated as compared with a case where the combustion state is determined on the basis of the evaluation result on one evaluation axis. In addition, by determining the combustion state by mapping the respective evaluation results on the two or more first evaluation axes on the combustion state determination map 13d, it is possible to intuitively grasp the relationship between the respective evaluation results on the two or more first evaluation axes and the combustion state as a determination result, and to determine the combustion state at high speed.

### (Third Embodiment)

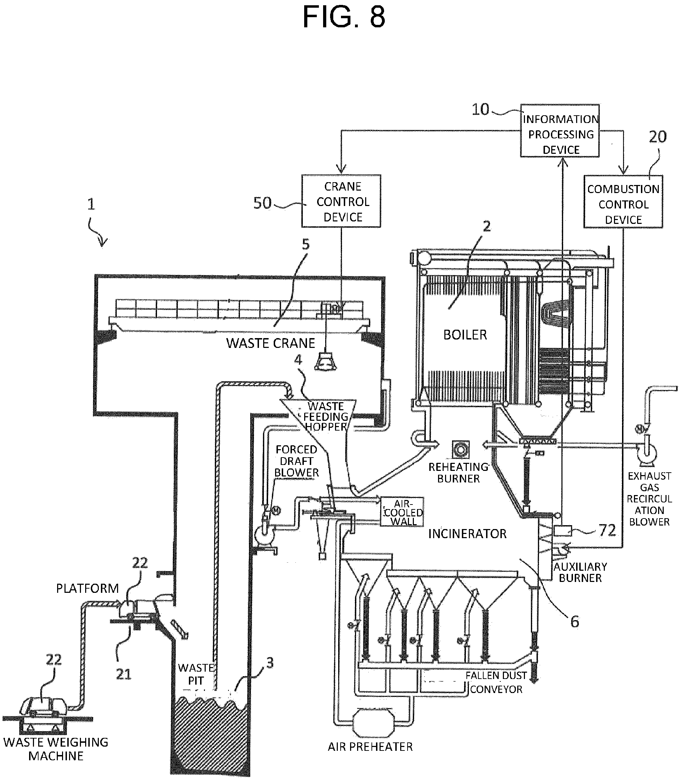

Next, a third embodiment will be described with reference to Fig. 8 to 10. Fig. 8 is a schematic diagram illustrating a configuration of an incineration facility 1 according to the third embodiment.

As illustrated in Fig. 8, the incineration facility 1 according to the third embodiment is different from the first embodiment only in that the infrared imaging device 71 that images the inside of the incinerator 6 is omitted, and the other configurations are similar to those of the first embodiment.

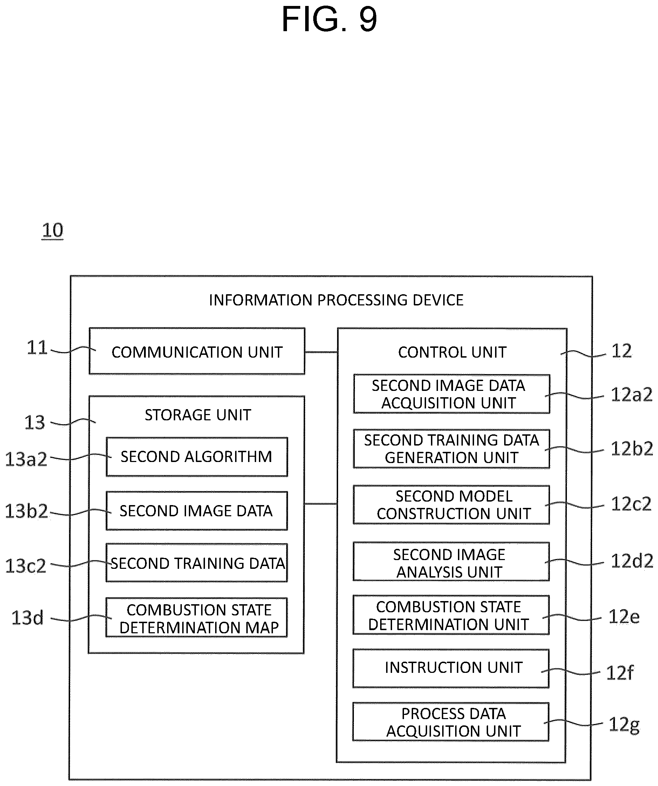

Fig. 9 is a block diagram illustrating a configuration of an information processing device 10 according to the third embodiment. The information processing device 10 includes one or more computers.

As illustrated in Fig. 9, the information processing device 10 includes a communication unit 11, a control unit 12, and a storage unit 13. The units are communicably connected to each other via a bus or a network.

Among these, the communication unit 11 is a communication interface between each device of the visible light imaging device 72, the crane control device 50, and the combustion control device 20 and the information processing device 10. The communication unit 11 transmits and receives information between each device of the visible light imaging device 72, the crane control device 50, and the combustion control device 20 and the information processing device 10.

The storage unit 13 is, for example, a non-volatile data storage such as a hard disk or a flash memory. The storage unit 13 stores various data handled by the control unit 12. In addition, the storage unit 12 stores a second algorithm 13a2 used for machine learning by a second model construction unit 12c2 described later, second image data 13b2 acquired by the second image data acquisition unit 12a2, second training data 13c2 generated by the second training data generation unit 12b2, and the combustion state determination map 13d used by the combustion state determination unit 12e. Details of each piece of information 13a2 to 13d will be described later.

The control unit 12 is a control means that performs various processes of the information processing device 10. As illustrated in Fig. 9, the control unit 11 includes the second image data acquisition unit 12a2, the second training data generation unit 12b2, the second model construction unit 12c2, the second image analysis unit 12d2, the combustion state determination unit 12e, the instruction unit 12f, and the process data acquisition unit 12g. These units may be implemented by a processor in the information processing device 10 executing a predetermined program, or may be implemented by hardware.

Among them, the configurations of the second image data acquisition unit 12a2, the process data acquisition unit 12g, and the instruction unit 12f are similar to those of the first embodiment, and the description thereof will be omitted.

The second training data generation unit 12b2 generates second training data 13c2 by associating respective classification labels on two or more second evaluation axes, which are elements for determining the combustion state, artificially given by the operator on the basis of the empirical rule to the second image data 13b2. The second training data 13c2 is stored in the storage unit 13. Here, the classification label may be absolute classification information (classification determined by a relationship with respect to a predetermined absolute reference (threshold)) on the second evaluation axis, or may be a relative order (relative order relationship in a group including a plurality of pieces of visible light image data) on the second evaluation axis among a plurality of pieces of visible light image data. The second evaluation axis may include two or more of a flame state, a position of a combustion completion point, a shape of the combustion completion point, an amount of the object to be combusted, quality of the object to be combusted, a type of the object to be combusted, an amount of the unburned object, and an amount of incineration ash.

As an example, in a case where the flame state is set as one second evaluation axis, the classification label may be good, normal, or poor (absolute information) (the types of labels may be increased), or may be obtained by ordering the superiority and inferiority of the flame state for the plurality of pieces of the second image data (relative information). As another example, in a case where the position of the combustion completion point (burning out point) is set as one second evaluation axis, the classification label may be near, slightly near, normal, slightly far, or far (the types of labels may be increased), or the perspective of the position of the combustion completion point may be ordered for the plurality of pieces of the second image data. As another example, in a case where the shape of the combustion completion point is set as one second evaluation axis, the classification label may be good, normal, or poor (the types of labels may be increased), or superiority and inferiority of the shape of the combustion completion point may be ordered for the plurality of pieces of the second image data. As another example, in a case where the amount of the object to be combusted is set as one second evaluation axis, the classification label may be large, normal, or small (absolute information) (the types of labels may be increased), or may be obtained by ordering the magnitude of the amount of the object to be combusted for the plurality of pieces of the second image data (relative information). As another example, in a case where the quality of the object to be combusted is set as one second evaluation axis, the classification label may be ordinary waste, high-calorific value waste (that is, high-calorie waste), or low-calorific value waste (that is, low-calorie waste) (the types of labels may be increased), or superiority and inferiority of the quality of the object to be combusted may be ordered for the plurality of pieces of the second image data. As another example, when the type of the object to be combusted is set as one second evaluation axis, the classification label may be a waste in unbroken waste bags, a pruned branch, or a futon (the types of labels may be increased). As another example, in a case where the amount of the unburned object is set as the second evaluation axis, the classification label may be large, normal, or small (the types of labels may be increased), or the magnitude of the amount of the unburned object may be ordered for the plurality of pieces of the second image data. As another example, in a case where the amount of incineration ash is set as one second evaluation axis, the classification label may be large, normal, or small (the types of labels may be increased), or the magnitude of the amount of incineration ash may be ordered for the plurality of pieces of the second image data.

The second training data generation unit 12b2 may generate the second training data 13c2 by associating respective classification labels on two or more second evaluation axes artificially given by the operator on the basis of the empirical rule to a combination of the second image data 13b2 and process data obtained from various sensors (not illustrated) installed in the incineration facility 1 and/or a calculated value obtained by calculation from the process data. Here, the process data is data in consideration of a time lag between the imaging time of the first image data and the response time of the sensor. The time lag may be appropriately determined on the basis of a response speed of the sensor, an installation position of the sensor in the facility, an experiment, a simulation, and the empirical rule of the operator.

The second image data 13b2 may be moving image data within 60 seconds or may be moving image data within 30 seconds. According to findings by the present inventors, the combustion state in the incinerator 6 changes in five to ten seconds. Therefore, for example, by using moving image data within 60 seconds (or within 30 seconds) as one segment of data as the second image data 13b1, it is possible to more accurately classify, predict, and estimate the combustion state in the incinerator 6.

In addition, the second image data 13b2 may be moving image data for five seconds or more or may be seven seconds or more. While the combustion state in the incinerator 6 changes in five to ten seconds, moving image data of, for example, five seconds or more (or seven seconds or more) is used as one segment of data as the second image data 13b2, so that the combustion state in the incinerator 6 can be classified, predicted, and estimated more accurately.

The second model construction unit 13c2 generates a second learned model by performing machine learning on the second training data 13b2 generated by the second training data generation unit 12b2 using the second algorithm 13a2. The second algorithm 13a2 used for machine learning may include at least one of statistical estimation, boosting, reinforcement learning and deep learning using maximum likelihood classification, Boltzmann machine, neural network (NN), support vector machine (SVM), Bayesian network, sparse regression, decision tree or random forest.

The second image analysis unit 13d2 uses new second image data (visible light image data) in the incinerator 6 acquired by the second image data acquisition unit 13a2 as an input, and acquires respective evaluation results on the two or more second evaluation axes (for example, the flame state and the amount of the object to be combusted) as output data by using the second learned model generated by the second model construction unit 13c2. The second image analysis unit 13d2 may normalize (score) the respective evaluation results on the two or more second evaluation axes to, for example, a numerical range of 0 to 100 and acquire a numerical value (score) within the range as output data.

The combustion state determination unit 12e determines the current combustion state in the incinerator 6 on the basis of respective evaluation results (scores) on the two or more second evaluation axes by the second image analysis unit 13d2. The determination result of the combustion state may be a label indicating characteristics of the combustion state (overcombustion, thick waste layer combustion, thin waste layer combustion, waste shortage, low-calorific value waste combustion, and the like), or may be a result obtained by changing a numerical value of the label.

The combustion state determination unit 12e may determine the current combustion state in the incinerator 6 by mapping a set of respective evaluation results on the two or more second evaluation axes onto the predetermined combustion state determination map 13d having the two or more second evaluation axes as coordinate axes.

Fig. 4 is a diagram illustrating an example of the combustion state determination map 13d. In the combustion state determination map 13d illustrated in Fig. 4, an XY coordinate plane with the amount of the object to be combusted as an X coordinate axis and the flame state as a Y coordinate axis is divided into a plurality of areas (in the illustrated example, there are six zones: a waste shortage zone, an overcombustion zone, a thin waste layer combustion zone, a good combustion (normal) zone, a thick waste layer combustion zone, and a low-calorific value waste combustion zone). The combustion state determination unit 12e maps, on the combustion state determination map 13d, a set (X, Y) including evaluation results on the respective second evaluation axes when the amount of the object to be combusted and the flame state are set as two different second evaluation axes. For example, as illustrated in Fig. 4, when a point P indicating a set (X, Y) including the evaluation result (X) obtained when the amount of the object to be combusted is set as the second evaluation axis and the evaluation result (Y) obtained when the flame state is set as the second evaluation axis is mapped in the good combustion (normal) zone, the combustion state determination unit 12e determines that the current combustion state is "good combustion (normal)".

The combustion state determination unit 12e may correct the determination result of the combustion state according to process data obtained from various sensors (not illustrated) installed in the facility and/or a calculated value obtained by calculation from the process data. For example, when the determination result of the combustion state is "low-calorific value waste combustion" and the furnace outlet temperature or the difference value PV-SV of the evaporation amount at that time satisfies a predetermined condition, the determination result of the combustion state may be corrected to "good combustion (normal)".

The combustion state determination unit 12e may display an alert indicating that it is difficult to keep the performance management index value within a predetermined range on a display (not illustrated) or may issue an alert by voice, vibration, light, or the like according to the determination result of the combustion state.

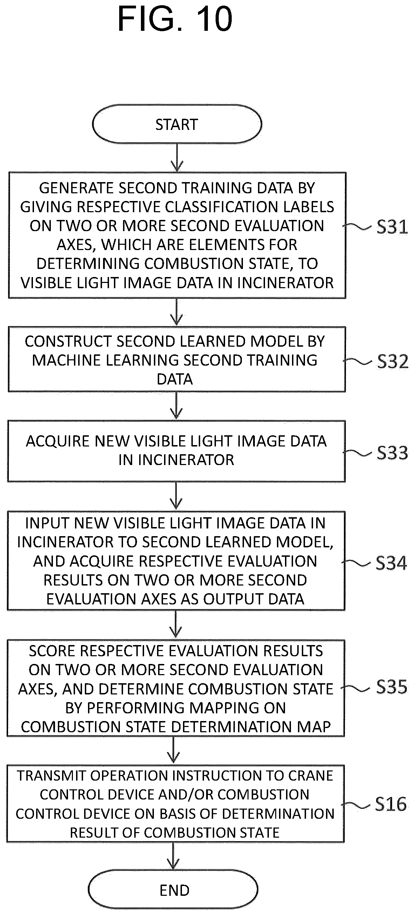

Next, an example of an information processing method by the information processing device 10 having such a configuration will be described. Fig. 10 is a flowchart illustrating an example of an information processing method.

As illustrated in Fig. 10, first, before the operation of the incineration facility 1, the second training data generation unit 12b2 generates the second training data 13c2 by associating classification labels on two or more second evaluation axes, which are elements for determining the combustion state, artificially given by the operator on the basis of the empirical rule to the past visible light image data (second image data 13b2) in the incinerator 6 imaged by the visible light imaging device 72 (step S31).

Next, the second model construction unit 13c2 generates a second learned model by performing machine learning on the second training data 13b2 generated by the second training data generation unit 12b2 using the second algorithm 13a2 (step S32).

Next, during the operation of the incineration facility 1, the second image data acquisition unit 12a2 acquires new visible light image data in the incinerator 6 imaged by the visible light imaging device 72 as the second image data 13b2 (step S33).

Next, the second image analysis unit 13d2 uses new second image data (visible light image data) in the incinerator 6 acquired by the second image data acquisition unit 13a2 as an input, and acquires respective evaluation results on the two or more second evaluation axes (for example, the amount of the object to be combusted and the flame state) as output data by using the second learned model generated by the second model construction unit 13c2 (step S34).

Then, the combustion state determination unit 12e determines the current combustion state in the incinerator 6 on the basis of the evaluation result on the second evaluation axis by the second image analysis unit 13d2 (step 35).

In step S35, the combustion state determination unit 12e may determine the current combustion state in the incinerator 6 by mapping a set of respective evaluation results on the two or more second evaluation axes onto the predetermined combustion state determination map 13d having the two or more second evaluation axes as coordinate axes (see Fig. 4).

Thereafter, the instruction unit 12f transmits an operation instruction to the crane control device 50 and/or the combustion control device 20 on the basis of the determination result of the combustion state determination unit 12e (step S16).

According to the present embodiment as described above, by determining the combustion state on the basis of respective evaluation results on the two or more second evaluation axes, the combustion state in the incinerator 6 can be accurately classified, predicted, and estimated as compared with a case where the combustion state is determined on the basis of the evaluation result on one evaluation axis. In addition, by determining the combustion state by mapping respective evaluation results on the two or more second evaluation axes on the combustion state determination map 13d, it is possible to intuitively grasp the relationship between the respective evaluation results on the two or more second evaluation axes and the combustion state as a determination result, and to determine the combustion state at high speed.

Note that, in the above-described embodiment, a part of the processing of the control unit 12 may be performed not on the information processing device 10 but on a cloud server different from the information processing device 10. A part of the storage unit 13 may be provided not on the information processing device 10 but on a cloud server different from the information processing device 10.

For example, the processing of the first training data generation unit 12d1 and/or the second training data generation unit 12d2 may be executed on the cloud server to generate the first training data 13c1 and/or the second training data 13c2, or the processing of the first model construction unit 12c1 and/or the second model construction unit 12c2 may be executed on the cloud server to construct a learned model. Furthermore, the processing of the first image analysis unit 12d1 and/or the second image analysis unit 12d2 may be executed on the cloud server using a learned model constructed on the cloud server, or the information processing device 10 may download a learned model (learned parameter) from the cloud server and execute the processing of the first image analysis unit 12d1 and/or the second image analysis unit 12d2 by using the learned model in the information processing device 10.

Although the embodiments and modifications have been described above by way of example, the scope of the present technology is not limited thereto, and can be changed and modified according to the purpose within the scope described in the claims. In addition, the embodiments and the modifications can be appropriately combined within a range in which the processing contents do not contradict each other.

Furthermore, although the information processing device 10 according to the embodiment can be configured by one or more computers, a program for causing one or more computers to implement the information processing device 10 and a computer-readable recording medium on which the program is non-temporarily recorded are also the protection targets of the present invention.

## Claims

1. An information processing device comprising:
a first image analysis unit that uses a first learned model obtained by machine learning first training data generated by giving a classification label on at least one first evaluation axis, which is an element for determining a combustion state, to infrared image data in an incinerator imaged by an infrared imaging device, and performs evaluation on the first evaluation axis with new infrared image data in the incinerator as an input; and
a combustion state determination unit that determines a current combustion state on a basis of an evaluation result on the first evaluation axis.

2. The information processing device according to claim 1, wherein
the first evaluation axis includes at least one of an amount of an object to be combusted, quality of the object to be combusted, a type of the object to be combusted, a temperature of the object to be combusted, a combustion gas generation amount, or a temperature of a wall of the incinerator.

3. The information processing device according to claim 1 or 2, wherein
the infrared image data is moving image data within 60 seconds.

4. The information processing device according to any one of claims 1 to 3, wherein
the infrared image data is moving image data for five seconds or more.

5. The information processing device according to any one of claims 1 to 4, wherein
the classification label is at least one of a label indicating which of a plurality of predetermined classification items corresponds to or a relative order among a plurality of pieces of infrared image data.

6. The information processing device according to any one of claims 1 to 5, wherein
the first image analysis unit uses a first learned model obtained by machine learning first training data generated by giving a classification label on the first evaluation axis to a combination of the infrared image data in the incinerator and process data obtained from a sensor installed in a facility, and/or a calculated value obtained by calculation from the process data, and performs evaluation on the first evaluation axis with a combination of new infrared image data in the incinerator and new process data and/or a calculated value obtained by calculation from the process data as an input.

7. The information processing device according to claim 6, wherein
the process data is data in consideration of a time lag between an imaging time of the infrared image data and a response time of the sensor, and
the time lag is determined on a basis of at least one of a response speed of the sensor, an installation position of the sensor in the facility, an experiment, a simulation, or an empirical rule of an operator.

8. The information processing device according to any one of claims 1 to 7, wherein
the first image analysis unit uses a first learned model obtained by machine learning first training data generated by giving a classification label on each of two or more of the first evaluation axes, which is an element for determining a combustion state, to infrared image data in the incinerator, and performs evaluation on each of the two or more of the first evaluation axes with new infrared image data in the incinerator as an input, and
the combustion state determination unit determines a current combustion state by mapping respective evaluation results on the two or more of the first evaluation axes on a predetermined combustion state determination map having the two or more of the first evaluation axes as coordinate axes.

9. The information processing device according to any one of claims 1 to 7, further comprising:
a second image analysis unit that uses a second learned model obtained by machine learning second training data generated by giving a classification label on at least one second evaluation axis, which is an element for determining a combustion state, to visible light image data in the incinerator imaged by a visible light imaging device, and performs evaluation on the second evaluation axis with new visible light image data in the incinerator as an input, wherein
the combustion state determination unit determines a current combustion state by mapping respective evaluation results on the first evaluation axis and the second evaluation axis on a predetermined combustion state determination map having the first evaluation axis and the second evaluation axis as coordinate axes.

10. The information processing device according to claim 9, wherein
the second evaluation axis includes at least one of a flame state, a position of a combustion completion point, a shape of the combustion completion point, an amount of an object to be combusted, quality of the object to be combusted, a type of the object to be combusted, an amount of an unburned object, or an amount of incineration ash.

11. The information processing device according to any one of claims 1 to 10, wherein
the combustion state determination unit corrects a determination result of the combustion state according to process data obtained from the sensor installed in the facility and/or a calculated value obtained by calculation from the process data.

12. The information processing device according to any one of claims 1 to 11, wherein
the combustion state determination unit displays or activates an alert according to a determination result of the combustion state.

13. The information processing device according to any one of claims 1 to 12, further comprising:
an instruction unit that transmits an operation instruction to a crane control device and/or a combustion control device on a basis of a determination result of the combustion state determination unit.

14. The information processing device according to any one of claims 1 to 13, wherein
an algorithm used for the machine learning includes at least one of statistical estimation, boosting, reinforcement learning and deep learning using maximum likelihood classification, Boltzmann machine, neural network (NN), support vector machine (SVM), Bayesian network, sparse regression, decision tree or random forest.

15. The information processing device according to any one of claims 1 to 14, further comprising:
a model construction unit that generates the first learned model by performing machine learning on first training data generated by giving a classification label on at least one first evaluation axis, which is an element for determining a combustion state, to infrared image data in an incinerator imaged by an infrared imaging device.

16. A system comprising:
the information processing device according to claim 13; and
the crane control device that controls a crane that agitates or transports waste materials on a basis of an operation instruction transmitted from the information processing device, and/or the combustion control device that controls combustion of the waste materials in an incinerator.

17. An information processing method executed by a computer, the method comprising:
a step of using a first learned model obtained by machine learning first training data generated by giving a classification label on at least one first evaluation axis, which is an element for determining a combustion state, to infrared image data in an incinerator imaged by an infrared imaging device, and performing evaluation on the first evaluation axis with new infrared image data in the incinerator as an input; and
a step of determining a current combustion state on a basis of an evaluation result on the first evaluation axis.

18. An information processing program for causing a computer to execute:
a step of using a first learned model obtained by machine learning first training data generated by giving a classification label on at least one first evaluation axis, which is an element for determining a combustion state, to infrared image data in an incinerator imaged by an infrared imaging device, and performing evaluation on the first evaluation axis with new infrared image data in the incinerator as an input; and
a step of determining a current combustion state on a basis of an evaluation result on the first evaluation axis.

19. An information processing device comprising:
a first image analysis unit that uses a first learned model obtained by machine learning first training data generated by giving a classification label on at least one first evaluation axis, which is an element for determining a combustion state, to first image data in an incinerator imaged by a first imaging device, and performs evaluation on the first evaluation axis with new first image data in the incinerator as an input;
a second image analysis unit that uses a second learned model obtained by machine learning second training data generated by giving a classification label on at least one second evaluation axis, which is an element for determining a combustion state, to second image data in an incinerator imaged by a second imaging device, and performs evaluation on the second evaluation axis with new second image data in the incinerator as an input; and
a combustion state determination unit that determines a current combustion state by mapping respective evaluation results on the first evaluation axis and the second evaluation axis on a predetermined combustion state determination map having the first evaluation axis and the second evaluation axis as coordinate axes.

20. The information processing device according to claim 19, wherein
the first imaging device is an infrared imaging device, and the second imaging device is a visible light imaging device.

21. The information processing device according to claim 20, wherein
the first evaluation axis includes at least one of an amount of an object to be combusted, quality of the object to be combusted, a type of the object to be combusted, a temperature of the object to be combusted, a combustion gas generation amount, or a temperature of a wall of the incinerator.

22. The information processing device according to claim 20 or 21, wherein
the second evaluation axis includes at least one of a flame state, a position of a combustion completion point, a shape of the combustion completion point, an amount of an object to be combusted, quality of the object to be combusted, a type of the object to be combusted, an amount of an unburned object, or an amount of incineration ash.

23. The information processing device according to any one of claims 19 to 22, wherein
the first image data is moving image data within 60 seconds, and/or
the second image data is moving image data within 60 seconds.

24. The information processing device according to any one of claims 19 to 23, wherein
the first image data is moving image data for five seconds or more, and/or
the second image data is moving image data for five seconds or more.

25. The information processing device according to any one of claims 19 to 24, wherein
the classification label in the first training data is at least one of a label indicating which of a plurality of predetermined classification items corresponds to, or a relative order among a plurality of pieces of the first image data, and/or
the classification label in the second training data is at least one of a label indicating which of a plurality of predetermined classification items corresponds to, or a relative order among a plurality of pieces of the second image data.

26. The information processing device according to any one of claims 19 to 25, wherein
the first image analysis unit uses a first learned model obtained by machine learning first training data generated by giving a classification label on the first evaluation axis to a combination of first image data in the incinerator, process data obtained from a sensor installed in a facility, and/or a calculated value obtained by calculation from the process data, and performs evaluation on the first evaluation axis with a combination of new first image data in the incinerator and new process data and/or a calculated value obtained by calculation from the process data as an input, and/or
the second image analysis unit uses a second learned model obtained by machine learning second training data generated by giving a classification label on the second evaluation axis to a combination of second image data in the incinerator, process data obtained from the sensor installed in the facility, and/or a calculated value obtained by calculation from the process data, and performs evaluation on the second evaluation axis with a combination of new second image data in the incinerator and new process data and/or a calculated value obtained by calculation from the process data as an input.

27. The information processing device according to claim 26, wherein
the process data is
data in consideration of a time lag between an imaging time of the first image data and/or the second image data and a response time of the sensor, and
the time lag is determined on a basis of at least one of a response speed of the sensor, an installation position of the sensor in the facility, an experiment, a simulation, or an empirical rule of an operator.

28. An information processing device comprising:
a first image analysis unit that uses a first learned model obtained by machine learning first training data generated by giving a classification label on each of two or more of first evaluation axes, which is an element for determining a combustion state, to first image data in an incinerator imaged by a first imaging device, and performs evaluation on each of the two or more of the first evaluation axes with new image data in the incinerator as an input; and
a combustion state determination unit that determines a current combustion state by mapping respective evaluation results on the two or more of the first evaluation axes on a predetermined combustion state determination map having the two or more of the first evaluation axes as coordinate axes.

29. The information processing device according to claim 28, wherein
the first imaging device is an infrared imaging device.

30. The information processing device according to claim 29, wherein
the first evaluation axis includes at least one of an amount of an object to be combusted, quality of the object to be combusted, a type of the object to be combusted, a temperature of the object to be combusted, a combustion gas generation amount, or a temperature of a wall of the incinerator.

31. The information processing device according to claim 28, wherein
the first imaging device is a visible light imaging device.

32. The information processing device according to claim 31, wherein
the first evaluation axis includes at least one of a flame state, a position of a combustion completion point, a shape of the combustion completion point, an amount of an object to be combusted, quality of the object to be combusted, a type of the object to be combusted, an amount of an unburned object, or an amount of incineration ash.

33. The information processing device according to any one of claims 19 to 32, wherein
the combustion state determination unit corrects a determination result of the combustion state according to process data obtained from the sensor installed in the facility and/or a calculated value obtained by calculation from the process data.

34. The information processing device according to any one of claims 19 to 33, wherein
the combustion state determination unit displays or activates an alert according to a determination result of the combustion state.

35. The information processing device according to any one of claims 19 to 34, further comprising:
an instruction unit that transmits an operation instruction to a crane control device and/or the combustion control device on a basis of a determination result of the combustion state determination unit.

36. The information processing device according to any one of claims 19 to 35, wherein
an algorithm used for the machine learning includes at least one of statistical estimation, boosting, reinforcement learning and deep learning using maximum likelihood classification, Boltzmann machine, neural network (NN), support vector machine (SVM), Bayesian network, sparse regression, decision tree or random forest.

37. The information processing device according to any one of claims 19 to 27, further comprising:
a first model construction unit that generates the first learned model by performing machine learning on first training data generated by giving a classification label on at least one first evaluation axis, which is an element for determining a combustion state, to first image data in the incinerator imaged by the first imaging device; and/or
a second model construction unit that generates the second learned model by performing machine learning on second training data generated by giving a classification label on at least one second evaluation axis, which is an element for determining a combustion state, to second image data in the incinerator imaged by the second imaging device.

38. The information processing device according to any one of claims 28 to 32, further comprising:
a first model construction unit that generates the first learned model by performing machine learning on first training data generated by giving a classification label on each of two or more first evaluation axes, which are elements for determining a combustion state to first image data in the incinerator imaged by the first imaging device.

39. A system comprising:
the information processing device according to claim 35; and
the crane control device that controls a crane that agitates or transports waste materials on a basis of an operation instruction transmitted from the information processing device, and/or the combustion control device that controls combustion of the waste materials in an incinerator.

40. An information processing method executed by a computer, the method comprising:
a step of using a first learned model obtained by machine learning first training data generated by giving a classification label on at least one first evaluation axis, which is an element for determining a combustion state, to first image data in the incinerator imaged by a first imaging device, and performing evaluation on the first evaluation axis with new first image data in the incinerator as an input;
a step of using a second learned model obtained by machine learning second training data generated by giving a classification label on at least one second evaluation axis, which is an element for determining a combustion state, to second image data in an incinerator imaged by a second imaging device, and performing evaluation on the second evaluation axis with new second image data in the incinerator as an input; and
a step of determining a current combustion state by mapping respective evaluation results on the first evaluation axis and the second evaluation axis on a predetermined combustion state determination map having the first evaluation axis and the second evaluation axis as coordinate axes.

41. An information processing method executed by a computer, the method comprising:
a step of using a first learned model obtained by machine learning first training data generated by giving a classification label on each of two or more of first evaluation axes, which is an element for determining a combustion state, to first image data in an incinerator imaged by a first imaging device, and performing evaluation on each of the two or more of the first evaluation axes with new first image data in the incinerator as an input; and
a step of determining a current combustion state by mapping respective evaluation results on the two or more of the first evaluation axes on a predetermined combustion state determination map having the two or more of the first evaluation axes as coordinate axes.

42. An information processing program for causing a computer to execute:
a step of using a first learned model obtained by machine learning first training data generated by giving a classification label on at least one first evaluation axis, which is an element for determining a combustion state, to first image data in the incinerator imaged by a first imaging device, and performing evaluation on the first evaluation axis with new first image data in the incinerator as an input;
a step of using a second learned model obtained by machine learning second training data generated by giving a classification label on at least one second evaluation axis, which is an element for determining a combustion state, to second image data in an incinerator imaged by a second imaging device, and performing evaluation on the second evaluation axis with new second image data in the incinerator as an input; and
a step of determining a current combustion state by mapping respective evaluation results on the first evaluation axis and the second evaluation axis on a predetermined combustion state determination map having the first evaluation axis and the second evaluation axis as coordinate axes.

43. An information processing program for causing a computer to execute:
a step of using a first learned model obtained by machine learning first training data generated by giving a classification label on each of two or more of first evaluation axes, which is an element for determining a combustion state, to first image data in an incinerator imaged by a first imaging device, and performing evaluation on each of the two or more of the first evaluation axes with new first image data in the incinerator as an input; and
a step of determining a current combustion state by mapping respective evaluation results on the two or more of the first evaluation axes on a predetermined combustion state determination map having the two or more of the first evaluation axes as coordinate axes.
